# EUROPÄISCHE PATENTANMELDUNG

(11) **EP 4 843 750 A1**
(43) Veröffentlichungstag der Anmeldung: **25.11.2026**
(21) Anmeldenummer: 26179918.3
(22) Anmeldetag: 20.05.2026
(51) Int. Cl.: B29C 49/18, B65D 1/02

(54) **KUNSTSTOFFBEHÄLTNIS**

(30) Priorität: 23.05.2025 DE 102025120259
(71) Anmelder: Krones AG, 93073 Neutraubling (DE)
(72) Erfinder: Knapp, Peter, 93073 Neutraubling (DE); Tissmer, Bastian, 93073 Neutraubling (DE)
(74) Vertreter: Hannke Bittner & Partner mbB Regensburg

(57) **Zusammenfassung**

Kunststoffbehältnis (100) zur Aufnahme von Getränken, mit einer Mündung (102), einem sich in einer Längsrichtung (L) des Kunststoffbehältnisses (100) an diese Mündung (102) anschließenden Wandabschnitt (104) und einem als Standfläche ausgebildeten Bodenabschnitt (106) wobei das Kunststoffbehältnis (100) einteilig ausgebildet ist, und wobei der Bodenabschnitt (106) einen in einer radialen Richtung (R) bezüglich der Längsrichtung (L) innen liegenden Anspritzpunkt (110) an der Außenwandung des Kunststoffbehältnisses (100) aufweist und einen diesen Anspritzpunkt (110) umgebenden Zentralbereich (112) aufweist, wobei der Bodenabschnitt eine Vielzahl von gleichartigen ersten Verstärkungsausbuchtungen (122) aufweist welche sich jeweils in einer radialen Richtung des Bodenabschnitts erstrecken wobei diese ersten Verstärkungsausbuchtungen jeweils in der radialen Richtung einen Abschnitt (AB_max1) maximaler Breite bezogen auf die Umfangsrichtung des Bodenabschnitts aufweisen, dadurch gekennzeichnet, dass dieser Abschnitt maximaler Breite bezogen auf einen geometrischen Mittelpunkt des Bodenabschnitts und/oder bezogen auf eine Längsachse des Behältnisses einen Winkel einschließt der größer ist als 20°.

## Beschreibung

Die vorliegende Erfindung bezieht sich auf ein Kunststoffbehältnis, insbesondere zur Aufnahme von Getränken. Derartige Behältnisse sind aus dem Stand der Technik seit längerer Zeit bekannt und lösen zunehmend Glasflaschen als Getränkebehältnisse ab. Der Vorteil dieser Kunststoffbehältnisse besteht insbesondere in dem geringeren Gewicht, der optimalen Handhabbarkeit bezüglich Design und teilweise in der mehrfachen Verwendbarkeit. Aus dem Stand der Technik sind diverse Flaschen unterschiedlichster Größen sowohl für kleine Füllmengen im Bereich von 200 ml bis hin zu großen Füllmengen von 5 I bekannt. Diese Behältnisse weisen dabei die unterschiedlichsten Formen auf. Im Rahmen von Herstellungsverfahren werden Vorformlinge, beispielsweise mittels Luftdruck, zu den Kunststoffbehältnissen aufgeblasen bzw. expandiert. Zu diesem Zweck werden Vorformlinge üblicherweise in eine Form eingegeben und gegenüber dieser Form expandiert.

Zur Kosteneinsparung und auch aus Gründen der Nachhaltigkeit wird versucht, die Kunststoffbehältnisse mit immer weniger Materialaufwand herzustellen. Dies bedeutet jedoch andererseits, dass an die Stabilität der Flaschen im Verhältnis zu der verwendeten Materialmenge zunehmend höhere Anforderungen zu stellen sind.

Insbesondere die Böden dieser Kunststoffbehältnisse sind besonders kritisch. Einerseits müssen diese Böden auch als Standflächen für die Behältnisse dienen und andererseits auch zum Teil höheren Innendrücken standhalten. Gleichzeitig sollen auch die Böden mit immer geringerem Materialaufwand hergestellt werden. Daneben sollen die Böden teilweise auch eine Stapelbarkeit mehrerer Behältnisse übereinander ermöglichen.

Die vorliegende Erfindung bezieht sich insbesondere auf Behältnisse für sogenannte Stillwässer und leicht druck - beaufschlagte Produkte. Bei diesen Produkten war die Ausprägung, insbesondere der Fußradien der Flaschenböden an den Rillen des Bodens nur mit einem hohen Fertigblasdruck von über 30 bar möglich. Dies bedeutet jedoch einen erhöhten Energieaufwand bei der Herstellung derartiger Behältnisse. Weiterhin weist ein derart hoher Fertigblasdruck von über 30 bar zur Ausformung der Fußradien der Rillen eines Bodendesigns auch keine Sicherheit für Druckstabilität ohne eine Abmusterung der Flasche in dem gefüllten Zustand auf.

Der aktuell verwendete Stillwasserboden hat einen sehr großen Standkreisdurchmesser und einen kleinen Fußradius. Die Rillengeometrie ist von gleichbleibender Breite und die Radien sind mit einem Radius R2 oder R3 sehr klein gewählt. Dies kann mit hohen bis sehr hohen Fertigblasdrücken ohne Probleme ausgeformt werden. Je geringer die Fertigblasdrücke und die Preformgewichte werden, umso schwieriger wird es die Bodengeometrie voll ausprägen zu können. Aus diesem Grund wird die Bodengeometrie so hergestellt, dass der Fertigblasdruck so gering wie möglich aber die Ausprägung des Bodens noch gewährleistet ist. Dann sind die kleinen Ecken am Standkreisdurchmesser aber nicht richtig ausgeformt.

Bei einer derzeit verwendeten Stillwasserbodengeometrie sind die Radien der Rillen (im Folgenden auch als Ausbuchtungen bezeichnet) sehr klein sowie der Radius vom Übergang Standkreisdurchmesser in die Flanke zum Hauptdurchmesser des Bodens und der Standkreisdurchmesser sehr groß. Um diese Bodengeometrie auszuformen, so dass die Geometrie zu nahezu 100% ausgeformt ist, bedarf es eines Blasdrucks von über 26 bis 32 bar.

Dies bedeutet einen sehr hohen Arbeitsluftverbrauch, was aufgrund von Energiekosten sehr teuer ist und auch einen sehr hohen CO2 Anteil bedeutet.

Aus der EP 2 764 979 A1 ist ein Kunststoffbehältnis bekannt, welches insbesondere zur Aufnahme von Stillgetränken dient und welches einen verstärkten Bodenabschnitt aufweist. In diesem Bodenabschnitt ist eine Vielzahl von ersten und zweiten Verstärkungsausbuchtungen vorgesehen.

Daneben ist man in jüngerer Zeit bestrebt, die Kunststoffbehältnisse auch aus zumindest teilweise recyceltem Material und insbesondere recyceltem Kunststoff herzustellen. Bevorzugt handelt es sich bei dem im Rahmen der Erfindung verwendeten Kunststoff um PET. Die Verwendung derartiger recycelter Materialien geht jedoch mit gewissen Schwierigkeiten einher. So ist es beispielsweise schwieriger, Kunststoffvorformlinge aus recyceltem Material einheitlich zu erwärmen. Diese ist insbesondere im Bereich der Böden der Behältnisse problematisch, da diese eine hohe Stabilität aufweisen müssen.

Der Erfindung liegt daher die Aufgabe zugrunde, ein kostengünstiges Herstellen des Kunststoffbehältnisses zur Verfügung zu stellen, welches gleichwohl auch bestimmten Innendrücken standhält. Insbesondere soll dabei ein Kunststoffbehältnis zur Verfügung gestellt werden, welches auch mit geringeren Fertigblasdrücken erzeugt werden kann. Auch bei der Abfüllung von stillen Getränken, insbesondere ohne Kohlensäure, muss das Kunststoffbehältnis geringen Innendrücken standhalten, die beispielsweise durch erhöhte Außentemperaturen in der Umgebung des Kunststoffbehältnisses hervorgerufen werden können.

Daneben soll auch ein derartiges Behältnis geschaffen werden, welches bevorzugt auch aus Kunststoffmaterialien mit einem bestimmten Rezyklatanteil und insbesondere mit einem Rezyklatanteil von mehr als 50% herstellbar ist.

Diese Aufgabe wird erfindungsgemäß durch den Gegenstand von Anspruch 1 erreicht.

Vorteilhafte Ausführungsformen und Weiterbildungen sind Gegenstand der Unteransprüche.

Ein erfindungsgemäßes Kunststoffbehältnis zur Aufnahme von Getränken weist eine Mündung auf, einen sich in einer Längsrichtung des Kunststoffbehältnisses an diese Mündung anschließenden Wandabschnitt und einen als Standfläche ausgebildeten Bodenabschnitt (der sich an den Wandabschnitt anschließt). Dabei ist das Kunststoffbehältnis einteilig ausgebildet und der Bodenabschnitt weist einen in einer radialen Richtung bezüglich der Längsrichtung innenliegenden Anspritzpunkt an der Außenwandung des Kunststoffbehältnisses auf.

Weiterhin weist das Kunststoffbehältnis bevorzugt einen diesen Anspritzpunkt umgebenden Zentralbereich auf sowie besonders bevorzugt einen sich von diesem Zentralbereich zu dem Wandabschnitt erstreckenden Übergangsabschnitt, wobei dieser Übergangsabschnitt in wenigstens einer und bevorzugt in jeder radialen Richtung des Kunststoffbehältnisses in wenigstens einem Teilabschnitt eine Krümmung mit einem endlichen Krümmungsradius aufweist.

Weiterhin weist bevorzugt der Zentralbereich eine erste domartige Struktur auf, derart, dass der Anspritzpunkt in der Längsrichtung des Kunststoffbehältnisses in Richtung der Mündung des Kunststoffbehältnisses ragt.

Bevorzugt schließt sich an diese erste domartige Struktur des Zentralbereichs in der zentralen Richtung nach außen eine zweite domartige Struktur an

Besonders bevorzugt ist diese zweite domartige Struktur in Richtung der Mündung des Kunststoffbehältnisses gewölbt , wobei besonders bevorzugt ein Krümmungsradius der ersten domartigen Struktur wenigstens abschnittsweise geringer ist, als ein Krümmungsradius der zweiten domartigen Struktur.

Erfindungsgemäß weist der Bodenabschnitt eine Vielzahl von gleichartigen ersten Verstärkungsausbuchtungen auf, welche sich jeweils in einer radialen Richtung des Bodenabschnitts erstrecken wobei diese ersten Verstärkungsausbuchtungen jeweils in der radialen Richtung einen Abschnitt maximaler Breite bezogen auf die Umfangsrichtung des Bodenabschnitts aufweisen und dieser Abschnitt maximaler Breite bezogen auf einen geometrischen Mittelpunkt des Bodenabschnitts und/oder bezogen auf eine Längsachse des Behältnisses einen Winkel einschließt der größer ist als 20°. Bevorzugt ist dieser Winkel größer als 22°, bevorzugt größer als 24°, bevorzugt größer als 26°, bevorzugt größer als 28°. Besonders bevorzugt ist dieser Winkel kleiner als 50°, bevorzugt kleiner als 45°, bevorzugt kleiner als 40°, bevorzugt kleiner als 38°.

Bei einer bevorzugten Ausführungsform erstreckt sich eine zentrale Linie dieser ersten Verstärkungsausbuchtungen (sowie auch der unten genannten zweiten Verstärkungsausbuchtungen) in einer radialen Richtung. Bevorzugt handelt es sich bei dieser zentralen Linie um eine Symmetrielinie. Besonders bevorzugt wird durch diese zentrale Linie und die Längsachse des Kunststoffbehältnisses eine Symmetrieebene aufgespannt bezüglich derer die Verstärkungsausbuchtung symmetrisch ist.

Während in der oben genannten EP 2 764 979 A1 in dem Bodenabschnitt Verstärkungsrippen vorgesehen sind, welche noch eine vergleichsweise geringe Breite in der Umfangsrichtung aufweisen, wird im Rahmen der Erfindung vorgeschlagen, anstelle dessen Verstärkungsausbuchtungen vorzusehen, welche eine erhöhte maximale Breite aufweisen. Unter einer Ausbuchtung wird ein dreidimensionales Gebilde verstanden, welches sich hier nicht nur in einer radialen Richtung des Bodenabschnitts erstreckt, sondern auch in zwei hierzu senkrechten Richtungen, wie etwa in einer Umfangsrichtung des Bodenabschnitts und entlang der Längsrichtung des Kunststoffbehältnisses. Im Gegensatz zu einer Rippe ist im Falle einer Ausbuchtung insbesondere die Erstreckung in der Umfangsrichtung größer.

Die Anmelderin hat herausgefunden, dass auf diese Weise eine hohe Stabilität des Bodenabschnitts auch bei deutlich reduzierten Fertigblasdrücken erreicht werden kann. Auch erlaubt diese Geometrie die Verwendung eines gegenüber dem Stand der Technik erheblich erhöhten Rezyklatanteils. Daneben können auf diese Weise auch vergleichsweise dünnwandige Behältnisse gefertigt werden.

Durch die Anmelderin wurde durch umfangreiche Versuche für die Blasdruckreduzierung herausgefunden, dass eine Anpassung der Bodengeometrie in den Bereichen Rillengeometrie (bzw. Ausbuchtungsgeometrie), Standkreisdurchmesser und Fußradius und bevorzugt auch eine Anpassung der Entlüftung auch hier mit Ultravent Pro eine Reduzierung des Fertigblasdrucks je nach Preformgewicht, -geometrie und -material auf 16 bis 21 bar ermöglicht (bei einer 1,851 Flasche). Somit sollte es möglich sein mit dieser Bodengeometrie auf jeden Fall unter 20 bar in manchen Fällen sogar noch weniger, ca. 15 bar Fertigblasdruck zu kommen. Ein Fertigblasdruck von 10 bis 11 bar bedeutet eine großen Einsparung an CO2 bei der Herstellung der Arbeitsluft und Kosten für Energie.

Die oben genannte Winkelangaben ist insbesondere besonders vorteilhaft bei mehr als vier ersten Verstärkungsausbuchtungen.

Bei einer bevorzugten Ausführungsform ergibt sich die Geometrie zu einem Teil aus der oben genannten EP 2 764 979 (deren Offenbarungsgehalt durch Bezugnahme vollständig auch zum Offenbarungsgehalt der vorliegenden Anmeldung gemacht wird) und und andererseits aus einer Ergänzung zur Fertigblasdruckreduzierung bevorzugt durch den kleineren Standkreisdurchmesser und dem größeren Fußradius, sowie insbesondere der Anpassung bzw. Modifizierung der Rippengeometrie (unten als Geometrie der Verstärkungsausbuchtungen bezeichnet).

Besonders bevorzugt schließt der Abschnitt maximaler Breite einen Winkel ein der größer ist als 22°, bevorzugt größer als 23°, bevorzugt größer als 24°, bevorzugt größer als 25° und besonders bevorzugt größer als 26°. Besonders bevorzugt schließt der Abschnitt maximaler Breite einen Winkel ein, der kleiner ist als 40°, bevorzugt kleiner als 36°, bevorzugt kleiner als 34°, bevorzugt kleiner als 32°, bevorzugt kleiner als 30°, bevorzugt kleiner als 29° und besonders bevorzugt kleiner als 28°. Diese Werte sind dabei insbesondere auf ein Kunststoffbehältnis mit 4 oder 5 ersten Verstärkungsausbuchtungen gültig.

Besonders bevorzugt ragen die ersten Verstärkungsausbuchtungen ausgehend von dem Bodenabschnitt in das Behältnisinnere des Kunststoffbehältnisses.

Bei einer weiteren bevorzugten Ausführungsform werden sind die ersten Verstärkungsausbuchtungen von einer Umrandung im Wesentlichen vollständig begrenzt. Unter im Wesentlichen vollständig wird verstanden, dass es möglich ist, dass ein geringer Abschnitt der Verstärkungsausbuchtungen, insbesondere ein am weitesten Innen in Bezug auf den Bodenabschnitt liegender Abschnitt keine Umrandung aufweist. Es ist jedoch auch denkbar, dass die Umrandung vollständig um die Verstärkungsausbuchtung verläuft.

Bevorzugt markiert diese Umrandung in einer Umfangsrichtung des Bodenabschnitts den Beginn der Verstärkungsausbuchtung und/oder den Bereich, der gegenüber dem übrigen Bodenabschnitt in das Innere des Kunststoffbehältnisses ragt. So kann in der Umfangsrichtung des Bodenabschnitts eine Linie definiert werden, welche an der Umrandung beginnt, sich in das Innere des Behältnisses zu krümmen.

Bei einer bevorzugten Ausführungsform weist der Bodenabschnitt wenigstens vier, bevorzugt wenigstens fünf erste Verstärkungsausbuchtungen auf. Diese sind bevorzugt gleichartig ausgebildet. Bei einer bevorzugten Ausführungsform weist der Bodenabschnitt höchstens zwölf, bevorzugt höchstens zehn, bevorzugt höchstens neun und besonders bevorzugt höchstens acht und besonders bevorzugt höchstens sechs erste Verstärkungsausbuchtungen auf.

Bevorzugt verläuft die maximale Breite der ersten Verstärkungsausbuchtung von einem ersten Abschnitt oder Punkt der genannten Umrandung zu einem zweiten Punkt der genannten Umrandung, wobei diese Verbindungslinie bevorzugt eine Symmetrielinie oder eine Symmetrieebene der ersten Verstärkungsausbuchtung senkrecht schneidet.

Bei einer weiteren bevorzugte Ausführungsform liegt ein Verhältnis zwischen der maximalen Breite der ersten Verstärkungsausbuchtung und der Länge der ersten Verstärkungsausbuchtung in der radialen Richtung zwischen 0,4016 und 0,8333.

Bei einer weiteren bevorzugte Ausführungsform liegt ein Verhältnis zwischen der maximalen Tiefe der ersten Verstärkungsausbuchtung und der Länge der ersten Verstärkungsausbuchtung in der radialen Richtung zwischen 0,0301 und 0,1429. Die Tiefe der Ausbuchtung wird hierbei definiert durch den Abstand zwischen einer Ebene, welche die Umrandung enthält und dem tiefsten Punkt der jeweiligen Verstärkungsausbuchtung.

Bei einer weiteren bevorzugte Ausführungsform liegt ein Verhältnis zwischen der maximalen Tiefe der ersten Verstärkungsausbuchtung und der maximalen Breite der ersten Verstärkungsausbuchtung zwischen 0,0429 und 0,3000.

Bei einer weiteren bevorzugten Ausführungsform weist der Bodenabschnitt eine Vielzahl von gleichartigen zweiten Verstärkungsausbuchtungen auf, welche sich jeweils in einer radialen Richtung des Bodenabschnitts erstrecken. Dabei sind bevorzugt die zweiten Verstärkungsausbuchtungen in der radialen Richtung des Bodenabschnitts kürzer als die ersten Verstärkungsausbuchtungen.

Besonders bevorzugt ist die Anzahl der ersten Verstärkungsausbuchtungen und die Anzahl der zweiten Verstärkungsausbuchtungen gleich.

Bei einer weiteren bevorzugten Ausführungsform sind die ersten Verstärkungsausbuchtungen und die zweiten Verstärkungsausbuchtungen in einer Umfangsrichtung des Bodenabschnitts abwechselnd angeordnet.

Bevorzugt liegt ein Verhältnis zwischen der Länge der zweiten Verstärkungsausbuchtungen und der Länge der ersten Verstärkungsausbuchtungen (jeweils in der radialen Richtung) zwischen 0,5476 und 0,7274.

Bei einer weiteren bevorzugten Ausführungsform weisen diese zweiten Verstärkungsausbuchtungen jeweils in der radialen Richtung einen Abschnitt (AB_max2) maximaler Breite bezogen auf die Umfangsrichtung des Bodenabschnitts auf und dieser Abschnitt maximaler Breite schließt bezogen auf einen geometrischen Mittelpunkt des Bodenabschnitts und/oder bezogen auf eine Längsachse des Behältnisses einen Winkel ein der größer ist als 20°.

Die oben genannte Winkelangaben ist insbesondere besonders vorteilhaft bei mehr als vier zweiten Verstärkungsausbuchtungen.

Besonders bevorzugt schließt der Abschnitt maximaler Breite einen Winkel ein der größer ist als 22°, bevorzugt größer als 23°, bevorzugt größer als 24°, bevorzugt größer als 25° und besonders bevorzugt größer als 26°. Besonders bevorzugt schließt der Abschnitt maximaler Breite einen Winkel ein, der kleiner ist als 40°, bevorzugt kleiner als 36°, bevorzugt kleiner als 34°, bevorzugt kleiner als 32°, bevorzugt kleiner als 30°, bevorzugt kleiner als 29° und besonders bevorzugt kleiner als 28.

Besonders bevorzugt ragen die zweiten Verstärkungsausbuchtungen ausgehend von dem Bodenabschnitt in das Behältnisinnere des Kunststoffbehältnisses.

Bei einer weiteren bevorzugten Ausführungsform sind die zweiten Verstärkungsausbuchtungen von einer Umrandung im Wesentlichen vollständig begrenzt. Bevorzugt markiert diese Umrandung in einer Umfangsrichtung des Bodenabschnitts den Beginn der Verstärkungsausbuchtung. So kann in der Umfangsrichtung des Bodenabschnitts eine Linie definiert werden, welche an der Umrandung beginnt, sich in das Innere des Behältnisses zu krümmen.

Bei einer bevorzugten Ausführungsform weist der Bodenabschnitt wenigstens vier, bevorzugt wenigstens fünf zweite Verstärkungsausbuchtungen auf. Diese sind bevorzugt gleichartig ausgebildet. Bei einer bevorzugten Ausführungsform weist der Bodenabschnitt höchstens zwölf, bevorzugt höchstens zehn, bevorzugt höchstens neun und besonders bevorzugt höchstens acht und besonders bevorzugt höchstens sechs zweite Verstärkungsausbuchtungen auf.

Bevorzugt verläuft die maximale Breite der zweiten Verstärkungsausbuchtung von einem ersten Abschnitt oder Punkt der genannten Umrandung zu einem zweiten Punkt der genannten Umrandung, wobei diese Verbindungslinie bevorzugt eine Symmetrielinie oder eine Symmetrieebene der zweiten Verstärkungsausbuchtung senkrecht schneidet.

Bei einer weiteren bevorzugte Ausführungsform liegt ein Verhältnis zwischen der maximalen Breite der zweiten Verstärkungsausbuchtung und der Länge der zweiten Verstärkungsausbuchtung in der radialen Richtung zwischen 0,54 und 0,73, bevorzugt zwischen 0,5476 und 0,7274

Bei einer weiteren bevorzugte Ausführungsform liegt ein Verhältnis zwischen der maximalen Tiefe der zweiten Verstärkungsausbuchtung und der Länge der zweiten Verstärkungsausbuchtung in der radialen Richtung zwischen 0,04 und 0,27, bevorzugt zwischen 0,0491 und 0,2609 Die Tiefe der Ausbuchtung wird hierbei definiert durch den Abstand zwischen einer Ebene, welche die Umrandung enthält und dem tiefsten Punkt der jeweiligen Verstärkungsausbuchtung.

Bei einer weiteren bevorzugte Ausführungsform liegt ein Verhältnis zwischen der maximalen Tiefe der zweiten Verstärkungsausbuchtung und der maximalen Breite der zweiten Verstärkungsausbuchtung zwischen 0,04 und 0,3, bevorzugt zwischen 0,0429 und 0,3000

Bei einer weiteren bevorzugten Ausführungsform ist der Abschnitt maximaler Breite (AB_max1, AB_max2) der ersten Verstärkungsausbuchtungen und/oder der zweiten Verstärkungsausbuchtung bezogen auf die radiale Erstreckung dieser Verstärkungsausbuchtungen in den inneren 90% dieser Verstärkungsausbuchtung, bevorzugt in den inneren 85% dieser Verstärkungsausbuchtung, bevorzugt in den inneren 80% dieser Ausbuchtung und besonders bevorzugt in den inneren 75% dieser Verstärkungsausbuchtung angeordnet.

Bei einer weiteren bevorzugten Ausführungsform ist der Abschnitt maximaler Breite (AB_max1, AB_max2) der ersten Verstärkungsausbuchtungen und/oder der zweiten Verstärkungsausbuchtung bezogen auf die radiale Erstreckung dieser Verstärkungsausbuchtungen in den äußeren 50% dieser Ausbuchtung, bevorzugt in den äußeren 45% dieser Verstärkungsausbuchtung, bevorzugt in den äußeren 40% dieser Verstärkungsausbuchtung und besonders bevorzugt in den äußeren 35% dieser Verstärkungsausbuchtung angeordnet.

Bei einer weiteren vorteilhaften Ausführungsform weisen die ersten Verstärkungsausbuchtungen und/oder die zweiten Verstärkungsausbuchtungen eine umlaufende und diese Verstärkungsausbuchtungen umlaufende Begrenzungslinie (oben als Umrandung bezeichnet) auf und ein Querschnitt dieser Begrenzungslinie (oben als Umrandung bezeichnet) weist in einer Projektion entlang der Längsrichtung des Kunststoffbehältnisses ein birnenartiges Profil auf.

### Insbesondere gilt dies für die zweiten, kürzeren Verstärkungsausbuchtungen

Ein birnenartiges Profil ist insbesondere dadurch gekennzeichnet, dass es sich in einer Längsrichtung und einer hierzu senkrechten Querrichtung erstreckt und dass es an einem Ende der Längsrichtung einen gekrümmten Verlauf mit einem vorgegebenen ersten größeren Krümmungsradius aufweist und an dem anderen Ende der Längsrichtung einen zweiten gekrümmten Verlauf mit einem vorgegebenen zweiten und kleineren Durchmesser.

Zwischen diesen jeweiligen Krümmungen sind bevorzugt jeweils ebenfalls gekrümmte Übergangsbereiche vorgesehen, welche bevorzugt wenigstens abschnittsweise eine entgegengesetzte Krümmung aufweisen können.

Es wird darauf hingewiesen, dass diese Ausgestaltung auch ohne die oben erwähnte maximale Breite Anwendung finden kann. Daher behält sich die Anmelderin vor, Schutz zu beanspruchen für den Oberbegriff des Anspruch 1 in Verbindung mit der hier beschriebenen birnenartigen Ausgestaltung.

Bei einer weiteren vorteilhaften Ausführungsform weisen die ersten Verstärkungsausbuchtungen und/oder die zweiten Verstärkungsausbuchtungen eine umlaufende und diese Verstärkungsausbuchtungen umlaufende Begrenzungslinie auf (oben auch als Umrandung bezeichnet) und ein Verlauf dieser Begrenzungslinie in einer Projektion der Begrenzungslinie weist ausgehend von einem radial innersten Punkt bis zu einem radial äußersten Punkt und insbesondere entlang der Längsrichtung des Kunststoffbehältnisses wenigstens einen Wendepunkt auf.

Unter einem Wendepunkt wird ein Punkt verstanden, an dem sich eine Krümmung des Verlaufs ändert.

Bevorzugt weist dieser Verlauf wenigstens zwei Wendepunkte und besonders bevorzugt genau zwei Wendepunkte auf.

Bei einer weiteren bevorzugte Ausführungsform weist die ganze Umrandung (bzw. die gesamte (geschlossene) Begrenzungslinie wenigstens 2, bevorzugt wenigstens 4 und bevorzugt genau vier Wendepunkte auf.

Dieser Verlauf ist auch für ein birnenartiges Profil charakteristisch

Besonders bevorzugt trifft dieser Verlauf sowohl auf die erste als auch auf die zweite Verstärkungsausbuchtung.

Besonders bevorzugt weisen die Verstärkungsausbuchtungen auch in Ebenen, welche zu einer Ebene, welche durch die genannte Umrandung gebildet wird das hier beschriebene Profil mit dem wenigstens einen und bevorzugt den wenigstens zwei und bevorzugt mit den vier Wendepunkten auf.

Es wird darauf hingewiesen, dass diese Ausgestaltung auch ohne die oben erwähnte maximale Breite Anwendung finden kann. Daher behält sich die Anmelderin vor, Schutz zu beanspruchen für den Oberbegriff des Anspruch 1 in Verbindung mit der hier beschriebenen birnenartigen Ausgestaltung.

Durch diese Ausgestaltung des Behältnisses ist es möglich, dass der Fertigblasdruck für die Behältnisse auf weniger als 20 bar und bevorzugt auf weniger als 18bar reduziert werden kann. Bei diesem Fertigblasdruck lässt sich die hier beschriebene Bodengeometrie sehr gut ausformen. Weiterhin zeichnet sich das hier beschriebene Bodendesign durch eine Sicherheit für die Druckstabilität in gefülltem Zustand aus und ist in einem gefüllten Zustand auch nach Thermostabilitätstests von mehr als 38° über 24 Stunden druckstabil. Dabei kann dieses Behältnis Drücke im Bereich von wenigstens 0,3 bar standhalten. In bevorzugten, unten genauer beschriebenen Ausführungsformen, kann auch Drücken im Bereich von wenigstens 0,5 bar standgehalten werden.

Vorteilhaft weist der besagte Zentralbereich einen kreisförmigen Querschnitt auf und ist, wie oben erwähnt, domartig oder kuppelartig ausgebildet. Auf diese Weise ragt der Anspritzpunkt des Behältnisses selbst in Richtung des Innenvolumens, was dazu führt, dass auch bei einer Druckbelastung der Anspritzpunkt nicht in der Längsrichtung des Behältnisses nach unten hervorsteht und dessen Standsicherheit behindert.

Die vorteilhaft vorhandene zweite domartige Struktur dient insbesondere auch zur Aufnahme von Drücken bzw. um diesen entgegenzuwirken. Bevorzugt weist der Zentralbereich in seinem vollständigen Bereich einen geringeren Krümmungsradius auf, als die zweite domartige Struktur. Dabei ist es möglich, dass diese Krümmungsradien konstant sind, es wäre jedoch auch denkbar, dass sich die Krümmungsradien in einem radialen Verlauf der Wandung ändern.

Vorteilhaft liegt ein Krümmungsradius in der ersten domartigen Struktur des Zentralbereichs in einem Bereich zwischen 5,00 mm und 20,0 mm, insbesondere zwischen 8,0 mm und 15,0 mm. Der Krümmungsradius in dem zweiten domartigen Bereich bzw. der zweiten domartigen Struktur liegt in einem Bereich zwischen 20,0 mm und 120 mm, insbesondere zwischen 35,0 mm und 90,0 mm. Bevorzugt liegt ein Verhältnis zwischen dem Krümmungsradius in der ersten domartigen Struktur und dem Krümmungsradius in der zweiten domartigen Struktur zwischen 0,02 und 0,5. Bevorzugt bleibt ein Krümmungsradius in den jeweiligen Bereichen jeweils im Wesentlichen konstant. Unter im Wesentlichen konstant wird hierbei verstanden, dass sich der Krümmungsradius gegenüber einem Mittelwert entlang des gekrümmten Bereichs um nicht mehr als 10°, bevorzugt um nicht mehr als 5°, besonders bevorzugt um nicht mehr als 3° ändert.

Dabei werden die besagten Verläufe bzw. deren Krümmungsradius jeweils betrachtet in einer Projektion in einer zu der Längsrichtung des Kunststoffbehältnisses senkrecht stehenden Richtung. Auch die zweite domartige Struktur ist damit bevorzugt in Richtung des Innenvolumens des Behältnisses gewölbt.

Vorteilhaft geht wenigstens ein Abschnitt des Bodenabschnitts in einen weiteren Abschnitt des Bodenabschnitts tangentenstetig über. So kann es beispielsweise sein, dass ein erster Abschnitt mit einem ersten Krümmungsradius, in einem zweiten Abschnitt mit einem zweiten hiervon abweichenden Krümmungsradius tangentenstetig übergeht.

Die Tangentenstetigkeit bezieht sich dabei, wie erwähnt, auf einen Übergang eines ersten Abschnitts bzw. eines ersten Kurvenabschnitts oder Splines in eine angrenzende Kurve, bei der es sich ebenfalls um eine Gerade, einen Spline oder einen gekrümmten Abschnitt handeln kann. Dabei soll im Übergang ein Winkel von 180° erreicht werden. Zu diesem Zweck wird beispielsweise bei einem Spline erster Ordnung dieser Spline über seinen ersten Stützpolynom derart gedreht, dass ein 180°-Einlauf erreicht wird.

Bevorzugt gehen wenigstens zwei Abschnitte des Bodenabschnitts in jeweils einen weiteren Abschnitt des Bodenabschnitts tangentenstetig über.

So ist es beispielsweise möglich, dass der Radius des Zentralbereiches in den sich nach außen anschließenden ersten Radius des Übergangsbereiches tangentenstetig übergeht. Auch kann ein erster Radius des Übergangsbereiches in einen weiteren radial außen liegenden Bereich des Übergangsbereiches tangentenstetig übergehen. Weiterhin kann auch ein Radius des Krümmungsbereiches in einen Radius eines Fußes des Behältnisses tangentenstetig übergehen. Daneben ist es auch möglich, dass ein gekrümmter Abschnitt eines Fußbereiches des Behältnisses in einen Abschnitt der Wandung des Behältnisses tangentenstetig übergeht.

Bei einer weiteren vorteilhaften Ausführungsform ist eine Standfläche des Kunststoffbehältnisses wenigstens abschnittsweise ringförmig ausgebildet, wobei diese Standfläche einen vorgegebenen Standkreisdurchmesser aufweist. Unter einen abschnittsweise ringförmigen Verlauf wird verstanden, dass es sowohl sich um einen durchgehenden ringförmigen Verlauf handeln kann, bevorzugt jedoch dieser ringförmige Verlauf wenigstens einmal und bevorzugt mehrere Male, insbesondere durch die oben erwähnten Verstärkungsausbuchtungen unterbrochen ist.

Bei einer weiteren vorteilhaften Ausführungsform ist ein Verhältnis zwischen dem Standkreisdurchmesser und einem Außendurchmesser des Kunststoffbehältnisses zwischen 0,60 und 0,95, bevorzugt zwischen 0,61 und 0,90, besonders bevorzugt zwischen 0,61 und 0,80, bevorzugt zwischen 0,61 und 0,75 und besonders bevorzugt zwischen 0,61 und 0,70 und besonders bevorzugt zwischen 0,62 und 0,69 und besonders bevorzugt zwischen 0,63 und 0,68 . Die Anmelderin hat ermittelt, dass sich dieser enge Bereich für das Verhältnis als besonders günstig erwiesen hat, um die gewünschte Druckreduzierung insbesondere für den Fertigblasdruck zu erreichen.

Bei einer weiteren vorteilhaften Ausführungsform weist der Bodenabschnitt in dem Bereich einer Standfläche des Bodenabschnitts einen Abschnitt mit einem im Wesentlichen geradlinigen Verlauf auf. Insbesondere ist ein Bereich innerhalb der Standfläche im Wesentlichen geradlinig ausgebildet. Dabei schließt sich vorteilhaft dieser geradlinige Abschnitt an den zweiten domartigen Körper bzw. die zweite domartige Struktur wenigstens mittelbar in der radialen Richtung des Behältnisses nach außen an.

Weiterhin kann sich an diesem geradlinigen Verlauf ein sogenannter Spline des Bodenbereiches anschließen, das heißt ein Verlauf, der durch ein Polynom n- ter Ordnung gebildet wird bevorzugt ist dabei n gleich oder größer als zwei, bevorzugt gleich oder größer als drei. Bevorzugt ist n dabei kleiner oder gleich sieben und bevorzugt kleiner oder gleich sechs.

Unter einem im Wesentlichen geradlinigen Verlauf wird verstanden, dass ein Krümmungsradius in diesem Bereich wenigstens doppelt so groß ist wie die Krümmungsradien der anderen Bereiche, bevorzugt wenigstens dreimal so groß, bevorzugt wenigstens fünfmal so groß, bevorzugt wenigstens zehnmal so groß. Es kann sich jedoch auch um einen unendlichen Krümmungsradius, das heißt um einen exakt geradlinigen Verlauf handeln.

Bevorzugt weist dieser im Wesentlichen geradlinig verlaufende Abschnitt eine Länge auf, die zwischen 0,01 mm und 2 mm liegt. Bevorzugt liegt diese Länge zwischen 0,1mm und 2,0mm, bevorzugt zwischen 0,2mm und 2,0mm, bevorzugt zwischen 0,3mm und 1,8mm, besonders bevorzugt zwischen 0,4mm und 1,6mm, bevorzugt zwischen 0,5mm und 1,5mm und besonders bevorzugt zwischen 0,6mm und 1,4mm und besonders bevorzugt zwischen 0,7mm und 1,3mm und besonders bevorzugt zwischen 0,8mm und 1,2mm

Bei einer weiteren vorteilhaften Ausführungsform ist eine Standfläche des Kunststoffbehältnisses wenigstens von den ersten Verstärkungsausbuchtungen unterbrochen. Bevorzugt ist die Standfläche auch von den zweiten Verstärkungsausbuchtungen unterbrochen.

Bei einer weiteren bevorzugten Ausführungsform ist die Standfläche des Kunststoffbehältnisses segmentartig ausgebildet, und weist bevorzugt eine Vielzahl von Standflächensegmenten auf, welche besonders bevorzugt jeweils von den ersten Verstärkungsausbuchtungen und von den zweiten Verstärkungsausbuchtungen unterbrochen sind.

Besonders bevorzugt schließen die einzelnen Standflächensegmente jeweils bezogen auf eine Längsachse des Kunststoffbehältnisses gleiche vorgegebene Umfangswinkel ein.

Besonders bevorzugt ist dieser Umfangswinkel bei einem Bodenabschnitt mit genau fünf ersten Verstärkungsausbuchtungen und genau zwei zweiten Verstärkungsausbuchtungen größer als 4°, bevorzugt größer als 5°, bevorzugt größer als 6° und besonders bevorzugt größer als 7°.

Besonders bevorzugt ist dieser Umfangswinkel bei einem Bodenabschnitt mit genau fünf ersten Verstärkungsausbuchtungen und genau zwei zweiten Verstärkungsausbuchtungen kleiner als 30°, bevorzugt kleiner als 25°, bevorzugt kleiner als 20° und besonders bevorzugt kleiner als 15° und besonders bevorzugt kleiner als 12° und besonders bevorzugt kleiner als 10° und besonders bevorzugt kleiner als 9°.

Bei einer weiteren bevorzugten Ausführungsform weisen die Verstärkungsausbuchtungen, in einer radialen Richtung unterschiedliche Längen auf. Dabei reichen bevorzugt die längeren Verstärkungsausbuchtungen, das heißt die ersten Verstärkungsausbuchtungen, bevorzugt an den oben erwähnten Zentralbereich heran und bevorzugt schneidet sie diesen wenigstens abschnittsweise. Die zweiten Verstärkungsausbuchtungen reichen bevorzugt nicht an den Zentralbereich heran. Vorteilhaft erstrecken sich die ersten und die zweiten Verstärkungsausbuchtungen in der radialen Richtung gleich weit nach außen und weisen bevorzugt in diesem Bereich einen im Wesentlichen gleichartiges Profil auf.

Bevorzugt wird die Standfläche des Behältnisses wenigstens von den ersten Verstärkungsrippen unterbrochen. Besonders bevorzugt wird die Standfläche auch von den zweiten Verstärkungsrippen unterbrochen.

Bei einer weiteren bevorzugten Ausführungsform weist wenigstens eine erste Verstärkungsausbuchtung und/oder wenigstens eine zweite Verstärkungsausbuchtung in einer Projektion entlang einer Symmetrielinie der Verstärkungsausbuchtung und/oder in einer Abwicklung in einer Umfangsrichtung des Bodenabschnitts einen vorgegebenen Verlauf auf, und dieser vorgegebene Verlauf weist wenigstens zwei und bevorzugt genau zwei Wendepunkte auf.

Besonders bevorzugt ist ein Abstand dieser beiden Wendepunkte kleiner als 50% des gesamten vorgegebenen Verlaufs

Bevorzugt gilt dies für beide Arten an Verstärkungsausbuchtungen, d.h. sowohl für die ersten Verstärkungsausbuchtungen als auch die zweiten Verstärkungsausbuchtungen

Bevorzugt ist ein Abstand dieser beiden Wendepunkte kleiner als 40%, bevorzugt kleiner 35%, bevorzugt kleiner als 32%des gesamten Verlaufs. Bevorzugt ist dieser Abstand der beiden Wendepunkte größer als 15% des gesamten Verlaufs, bevorzugt größer als 18% des gesamten Verlaufs und besonders bevorzugt größer als 20% des gesamten Verlaufs und besonders bevorzugt größer als 22% des gesamten Verlaufs

Es wird daher vorgeschlagen, dass die jeweiligen Profile im Vergleich zum Stand der Technik in Richtung ihres Tals relativ eng zulaufen

Bevorzugt ist ein Abstand dieser beiden Wendepunkte größer als 5%, bevorzugt größer als 10%, bevorzugt größer als 15% und besonders bevorzugt größer als 20% des gesamten Verlaufs.

Besonders bevorzugt weisen die ersten Verstärkungsausbuchtungen und/oder die zweiten Verstärkungsausbuchtungen an ihren jeweiligen Symmetrielinien einen gekrümmten Verlauf auf. Besonders bevorzugt weisen die ersten Verstärkungsausbuchtungen und/oder die zweiten Verstärkungsausbuchtungen ausgehend von ihren jeweiligen Symmetrielinien einen vorgegebenen Öffnungswinkel auf. Dieser Öffnungswinkel ist bevorzugt größer als 30°, bevorzugt größer als 40°, bevorzugt größer als 50° und besonders bevorzugt größer als 55°.

Weiterhin ist dieser Öffnungswinkel bevorzugt kleiner als 90°, bevorzugt kleiner als 80°, bevorzugt kleiner als 70° und besonders bevorzugt kleiner als 65°.

Bevorzugt werden diese Winkelmaße entlang der gesamten Länge der jeweiligen Verstärkungsausbuchtungen eingehalten.

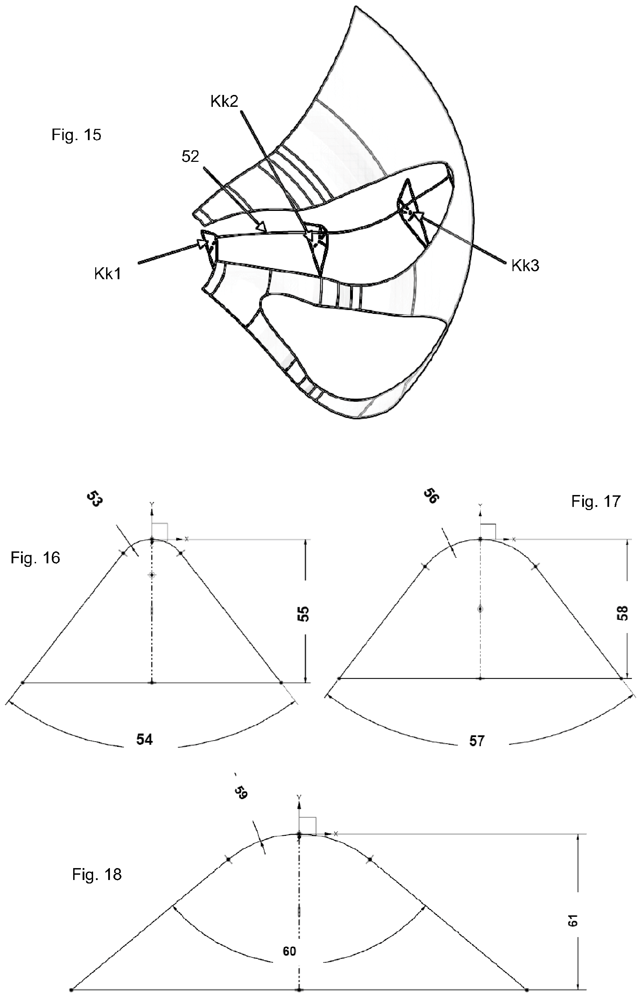

Bevorzugt weisen die ersten Verstärkungsausbuchtungen und/oder die zweiten Verstärkungsausbuchtungen jeweils Abschnitte auf, welche sich senkrecht zu einer radialen Richtung des Bodenabschnitts geradlinig erstrecken. Dies wird unten genauer unter Bezugnahme auf die Figuren 15 - 18 erläutert.

Bei einer weiteren bevorzugten Ausführungsform ist das Kunststoffbehältnis aus einem Kunststoffmaterial und insbesondere aus PET hergestellt, welches einen Rezyklatanteil von wenigstens 50%, bevorzugt von wenigstens 60%, bevorzugt von wenigstens 70%, bevorzugt von wenigstens 75%, und besonders bevorzugt von wenigstens 80% und besonders bevorzugt von wenigstens 85% aufweist.

Die Anmelderin hat ermittelt, dass sich gerade aus der hier beschriebenen Ausgestaltung des Bodenabschnitts besondere Vorteile in der Herstellung ergeben, wenn ein hoher Rezyklatanteil des Kunststoffmaterials verwendet wird.

Besonders bevorzugt weist das Kunststoffmaterial in dem Bodenabschnitt des Behältnisses eine Wanddicke auf, die zwischen 0,06 und 0,15mm liegt.

Besonders bevorzugt weist das Kunststoffmaterial in dem Grundkörper des Behältnisses eine Wanddicke auf, die zwischen 0,12 und 0,20mm, bevorzugt zwischen 0,14 und 0,20mm liegt.

Bei der Beurteilung der Wanddicke wird jeweils der Abspritzpunkt außer Acht gelassen.

Weiterhin wird darauf hingewiesen, dass bei der obigen Diskussion der geometrischen Verhältnisse des Kunststoffbehältnisses und/oder dessen Bodenabschnitt, etwaige Eingravierungen oder eingeprägte Logos ebenfalls außer Acht gelassen werden.

Die vorliegende Erfindung ist weiterhin auf ein Verfahren zum Herstellen eines Kunststoffbehältnisses der oben beschriebenen Art gerichtet. Dabei werden zunächst Kunststoffvorformlinge zur Verfügung gestellt. Weiterhin werden diese Kunststoffvorformlinge erwärmt und schließlich werden die Kunststoffvorformlinge innerhalb einer Blasform expandiert, wobei ein Bodenteil dieser Blasform derart gestaltet ist, dass es einen Bodenabschnitt eines Kunststoffbehältnisses nach wenigstens einem der vorangegangenen Ansprüche erzeugt.

Erfindungsgemäß werden die Kunststoffvorformlinge zu ihrer Expansion mit einem gasförmigen Medium mit wenigstens zwei unterschiedlichen Druckstufen beaufschlagt, wobei eine dieser Druckstufen ein Fertigblasdruck ist und dieser Fertigblasdruck unter 25 bar, bevorzugt unter 22 bar und besonders bevorzugt unter 20 und besonders bevorzugt unter 19bar und besonders bevorzugt unter 18 bar liegt. Durch diese gewählten Druckstufen kann, wie oben erwähnt, eine erhebliche Energieeinsparung bei der Umformung erreicht werden. Andererseits sind jedoch diese Druckstufen ausreichend, um den entsprechenden Bodenabschnitt zu erzeugen. Bevorzugt liegt eine zeitliche Dauer der Beaufschlagung mit dem Fertigblasdruck zwischen 0,9 Sekunden und 2,2 Sekunden.

Bei einem bevorzugten Verfahren werden Kunststoffvorformlinge aus einem Kunststoffmaterial verwendet, welche einen vorgegebenen Anteil an Rezyklat und besonders bevorzugt einen Anteil von wenigstens 50% Rezyklat aufweisen.

Die vorliegende Erfindung ist weiterhin auf die Verwendung eines Kunststoffbehältnisses der oben beschriebenen Art zur Befüllung mit einem stillen Getränk, beispielsweise einem Stillwasser, gerichtet. Derartige Getränke verursachen bevorzugt innerhalb des Behältnisses in einem geschlossenen Zustand desselben einen Innendruck von weniger als 1,5 bar, insbesondere von weniger als 1,0bar, bevorzugt von weniger als 0,7bar, bevorzugt von weniger als 0,5bar und besonders bevorzugt von weniger als 0,3bar.

Die Erfindung ist weiterhin auf eine Blasform zum Herstellen eines Kunststoffbehältnisses der oben beschriebenen Art gerichtet. Dabei weist diese Blasform ein Bodenteil auf, welches zur Erzeugung eines Bodenabschnitts für das Kunststoffbehältnis der oben beschriebenen Art geeignet ist. Vorteilhaft weist die Blasform auch zwei Seitenteile auf, welche zur Erzeugung einer Umfangswandung des Kunststoffbehältnisses dienen.

Weitere Vorteile und Ausführungsformen ergeben sich aus den beigefügten Zeichnungen. Darin zeigen:
- Fig. 1a, 1b: zwei Darstellungen von Kunststoffbehältnissen nach dem Stand der Technik;
- Fig. 2, 2a: zwei Darstellungen einer Außenkontur eines Bodenabschnitts eines erfindungsgemäßen Behältnisses in einer ersten Ausführungsform;
- Fig. 3: eine weitere Darstellung einer Außenkontur eines Bodenabschnitts eines erfindungsgemäßen Behältnisses in einer ersten Ausführungsform;
- Fig. 4, 4a: zwei weitere Darstellungen einer Außenkontur eines Bodenabschnitts eines erfindungsgemäßen Behältnisses in einer zweiten Ausführungsform;
- Fig. 5: eine weitere Darstellung einer Außenkontur eines Bodenabschnitts eines erfindungsgemäßen Behältnisses in einer zweiten Ausführungsform zur Veranschaulichung der einzelnen Krümmungen;
- Fig. 6: eine Darstellung einer Innenkontur eines Bodenabschnitts eines erfindungsgemäßen Behältnisses;
- Fig. 7: eine weitere Darstellung einer Innenkontur eines Bodenabschnitts eines erfindungsgemäßen Behältnisses;
- Fig. 8: eine Draufsicht auf einen Bodenabschnitt eines erfindungsgemäßen Behältnisses;
- Fig. 9: eine Darstellung zur Veranschaulichung der Ausbuchtungssegmente;
- Fig. 10: eine weitere Darstellung zur Veranschaulichung der Ausbuchtungssegmente;
- Fig. 11: einen Zwischenschritt von der Ausbuchtungsausschnittsgeometrie auf diese, auf welche eine erweiterte Ausbuchtungsausschhnittsgeometrie aufgesetzt wird;
- Fig. 12: eine Darstellung einer erweiterten Ausbuchtungsausschnittsgeometrie;
- Fig. 13: eine Darstellung einer erweiterten Ausbuchtungsausschnittsgeometrie;
- Fig.14: eine Darstellung zur Veranschaulichung der Krümmungsverläufe;
- Fig. 15: eine Darstellung zur Veranschaulichung der Ausbuchtungskammgeometrie;
- Fig. 16-18: drei Darstellungen von Ausbuchtungskammgeometrien;
- Fig. 19-20: zwei weitere Darstellungen zur Veranschaulichung der Ausbuchtungskammgeometrien;
- Fig. 21 - 23: drei weitere Darstellungen zur Veranschaulichung der Geometrie der Ausbuchtungen;
- Fig. 24: eine Darstellung zur Veranschaulichung der Freiformflächen an der Außenkontur des Bodenabschnitts;
- Fig. 25: eine Ansicht von unten auf einen erfindungsgemäßen Freiformbodenabschnitt eines erfindungsgemäßen Kunststoffbehältnisses;
- Fig. 26: eine Seitenansicht auf einen erfindungsgemäßen Freiformbodenabschnitt eines erfindungsgemäßen Kunststoffbehältnisses;
- Fig. 27: eine gedrehte Ansicht eines erfindungsgemäßen Freiformbodenabschnitts eines erfindungsgemäßen Kunststoffbehältnisses;
- Fig. 28: einen Schnitt durch eine kurze und eine lange Rille des Freiformbodens für stille und leicht druck beaufschlagte Produkte bis 0,3bar mit 5 Schleifen;
- Fig. 29: eine Draufsicht auf einen Bodenabschnitt mit nicht ausgeformten Standfüßchen;
- Fig. 30: eine Schrägansicht auf einen Bodenabschnitt mit nicht ausgeformten Standfüßchen;
- Fig. 31: eine Seitenansicht auf einen Bodenabschnitt mit nicht ausgeformten Standfüßchen;
- Fig. 32: eine weitere Seitenansicht auf einen Bodenabschnitt mit nicht ausgeformten Standfüßchen;
- Fig. 33: eine Skizze zur Darstellung der nicht ausgeformten Standfüßchen;
- Fig. 34: eine weitere Skizze zur Darstellung der nicht ausgeformten Standfüßchen;
- Fig. 35: eine Darstellung zur Veranschaulichung eines Rohres an den nicht ausgeformten Standfüßchen;
- Fig. 36: eine Darstellung zur Veranschaulichung der Form des auszubildenden Rohres an einer Flanke des Bodenabschnitts;
- Fig. 37: eine perspektivische Darstellung zur Veranschaulichung der Form des auszubildenden Rohres an einer Flanke des Bodenabschnitts;
- Fig. 38: eine weitere Darstellung des auszubildenden Rohres an einer Flanke des Bodenabschnitts;
- Fig. 39: eine Darstellung nach dem Abzug der Rohre von der Bodengeometrie;
- Fig. 40: eine abschnittsweise Darstellung des Bodenabschnitts mit Zylinderschnitten;
- Fig. 41: eine abschnittsweise Darstellung des Bodenabschnitts mit Zylinderschnitten für ein Kunststoffbehältnis nach dem Stand der Technik;
- Fig. 42: eine Darstellung des Bodenteils mit Veranschaulichung der unterschiedlichen Radien der zylinderförmigen Abschnitte;
- Fig. 43: eine gegenüberstellende Darstellung eines erfindungsgemäßen Bodenabschnitts im Vergleich zu einem Bodenabschnitt nach dem Stand der Technik;
- Fig. 44: eine gegenüberstellende Darstellung eines erfindungsgemäßen Bodenabschnitts im Vergleich zu einem Bodenabschnitt nach dem Stand der Technik in eine perspektivischen Darstellung;
- Fig. 45: eine gegenüberstellende Darstellung eines erfindungsgemäßen Bodenabschnitts im Vergleich zu einem Bodenabschnitt nach dem Stand der Technik in eine perspektivischen Darstellung;
- Fig. 46a - g: sieben Schnittdarstellungen des Bodenabschnitts bei unterschiedlichen Radien;
- Fig. 47: eine Darstellung eines Bodenabschnittssegments nach dem Stand der Technik; und
- Fig. 48: eine Darstellung eines erfindungsgemäßen Bodenabschnittssegments.

Die folgenden Figuren beschreiben ein Bodendesign, insbesondere für stille und leicht druckbeaufschlagte Produkte bis 1,0 bar Innendruck. Typische Füllmengen derartiger Behältnisse liegen zwischen 200ml und 5,0l, wobei ein niedriger Fertigblasdruck verwendet wird und eine verbesserte Ausformbarkeit der Bodengeometrie gewährleistet ist.

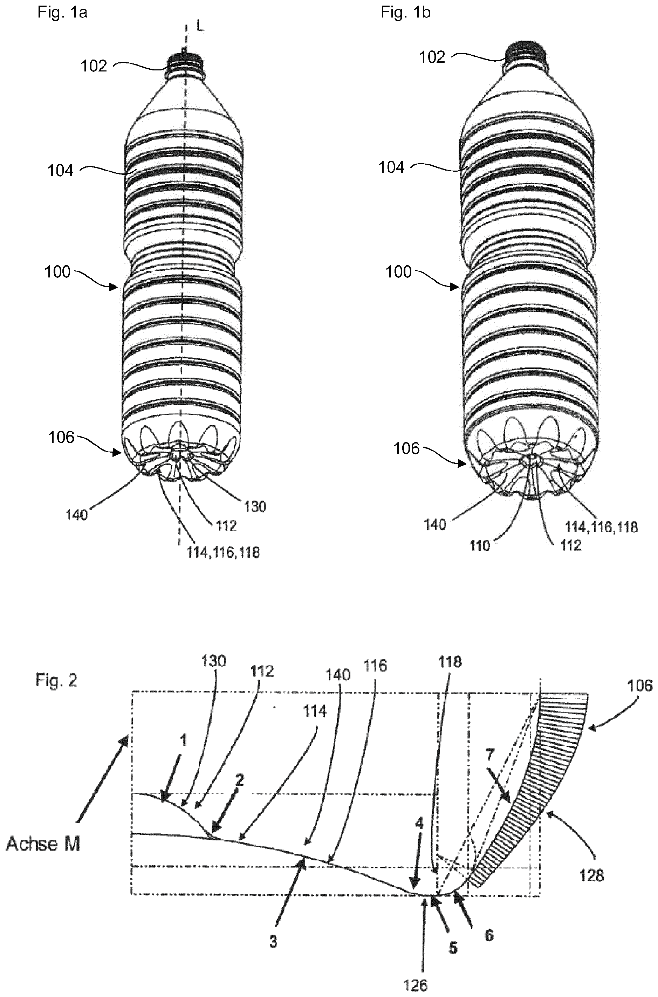

Die Fig. 1a und 1b zeigen Darstellungen eines Kunststoffbehältnisses 100 nach dem Stand der Technik in zwei möglichen Ausführungsformen. Dabei weist das Behältnis 100 jeweils einen Mündungsbereich 102 auf, der einen gegenüber einem Durchmesser des Behältnisses 100 verringerten Durchmesser aufweist. An diesen Mündungsbereich 102 schließt sich ein umlaufender Wandabschnitt 104 auf, der das in dem Behältnis befindliche Flüssigkeitsvolumen umgibt. Das Bezugszeichen L kennzeichnet die Längsrichtung des Kunststoffbehältnisses. An den Wandabschnitt 104 schließt sich ein Bodenabschnitt 106 des Behältnisses an, der im Folgenden genauer betrachtet werden soll. Diese Merkmale treffen in gleicher Weise für das erfindungsgemäße Kunststoffbehältnis 100 zu.

Dieser Bodenabschnitt 106 weist dabei den bei derartigen Kunststoffbehältnissen typischen Anspritzpunkt 110 auf, der in einem Zentralbereich 112 angeordnet ist. Dieser Zentralbereich 112 weist hierbei, wie in den Figuren erkennbar, eine domartige Struktur auf, die sich in das Innere des Behältnisses 100 erstreckt. An diesen Zentralbereich 112 schließt sich ein Übergangsbereich an, der sich auch in einer zu der Längsrichtung L senkrecht stehenden radialen Richtung des Behältnisses in Richtung des Wandabschnitts 104 erstreckt. Dieser Übergangsabschnitt weist wiederum mehrere Unterabschnitte 114, 116, 118 auf, die gemeinsam diesen Übergangsabschnitt ausbilden. Dabei können jedoch diese Unterabschnitte ineinander übergehend ausgebildet sein. Man erkennt, dass auch dieser Übergangsabschnitt eine domartige Struktur aufweist, welche sich in Richtung des Zentralbereichs nach innen, d.h. auf das Innenvolumen des Behältnisses hin zu erstreckt. Allerdings erkennt man, dass der Zentralbereich deutlich stärker gekrümmt ist als der Übergangsbereich. Diese Merkmale treffen auch für eine bevorzugte Ausführungsform des erfindungsgemäßen Kunststoffbehältnisses zu.

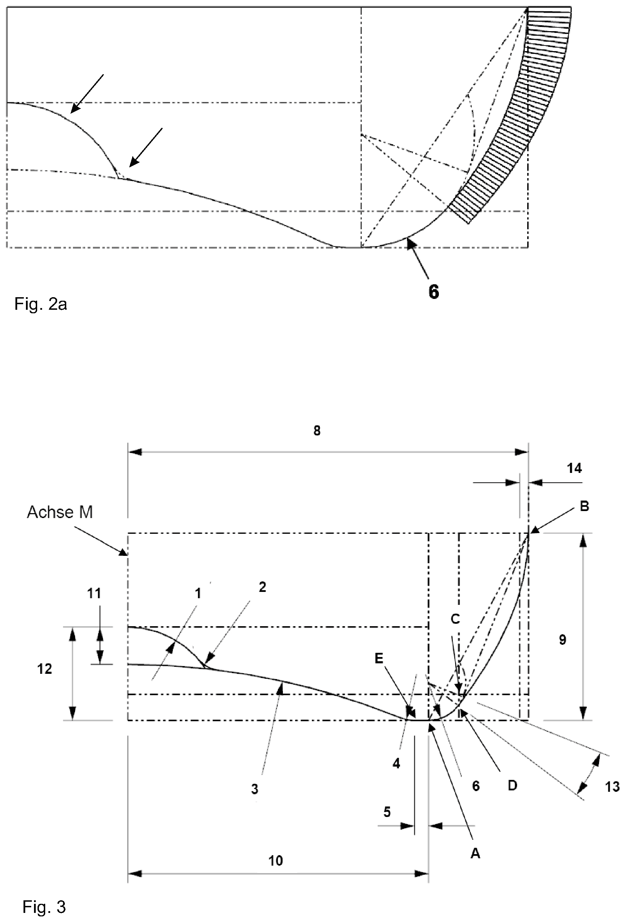

Die Figuren 2 - 3 beschreiben eine äußere Basiskontur eines erfindungsgemäßen Behältnisses in einer ersten Ausführungsform. Es wird explizit darauf hingewiesen, dass die Merkmale der nun im Einzelnen beschriebenen Ausgestaltungen nicht nur in ihrer Kombination, sondern auch einzeln anwendbar sind. So können beispielsweise unterschiedliche Krümmungsverläufe der unterschiedlichen Ausgestaltungen auch miteinander kombiniert werden. Gleiches gilt auch für die anderen nachfolgend beschriebenen Dimensionen.

Die in Fig. 2 gezeigte Variante der Basiskontur Außen wird von innen nach außen durch den kleinen Domradius 1, den Radius 2, den Außendomradius 3, den Innenfußradius 4, die Gerade 5, den Fußradius 6 und einem Spline 7. Aus dieser Kontur wird die sogenannte Außenfläche (AF) der Bodengeometrie durch eine Rotation um die Rotationsachse (Achse M) erzeugt.

Ausgehend von dieser Bodengeometrie sind die unten genauer beschriebenen Verstärkungsausbuchtungen ausgebildet. Der oben beschriebene Umfangsrand dieser Verstärkungsausbuchtungen ist bevorzugt derjenige Rand, ab dem sich die Verstärkungsausbuchtungen in das Innere des Kunststoffbehältnisses erstrecken.

Die Übergänge der Radien, kleiner Domradius 1 zu dem Radius 2, von dem Radius 2 zu dem Außen Domradius 3, von diesem zu dem Innenfußradius 5 und von diesem zu dem Fußradius 6 sind wenigstens teilweise und bevorzugt alle tangentenstetig.

Der Übergang vom Fußradius zum Spline 7 kann krümmungsstetig, mindestens aber tangentenstetig sein. Der Spline 7 geht bevorzugt krümmungsstetig, mindestens tangentenstetig, in den Außendurchmesser des Kunststoffbehältnisses über.

In Fig. 2a ist die Basiskontur Außen mit einem größeren Fußradius 6 dargestellt. Der Krümmungsverlauf des Splines 7 kann durch ein Polynom n-ten Grades beschrieben werden, wobei bevorzugt n größer gleich 2 und kleiner 7 ist.

Durch die Gerade 5 (vgl. Fig. 3) wird hier insbesondere auch eine Standfläche des Kunststoffbehältnisses definiert. Man erkennt, dass der Radius 2 (und auch der Radius 4) gegenläufig bezüglich Radien 1 und 3 ist, d.h. die Krümmung ist in diesem Bereich gegenüber der Umgebung umgekehrt. Auf diese Weise ist es möglich, dass die stärkere Krümmung in dem Zentralbereich 112, gegeben durch den kleinen Domradius 1 in die schwächere Krümmung in dem ersten Unterabschnitt 114 des Übergangsabschnitts übergehen kann.

Bevorzugt sind die Krümmungsradien in den genannten Unterabschnitten des Bodenabschnitts jeweils im Wesentlichen konstant.

Damit ist hier neben der ersten domartigen Struktur 130 des Zentralbereichs noch eine zweite domartige Struktur 140 des Übergangsbereichs vorhanden.

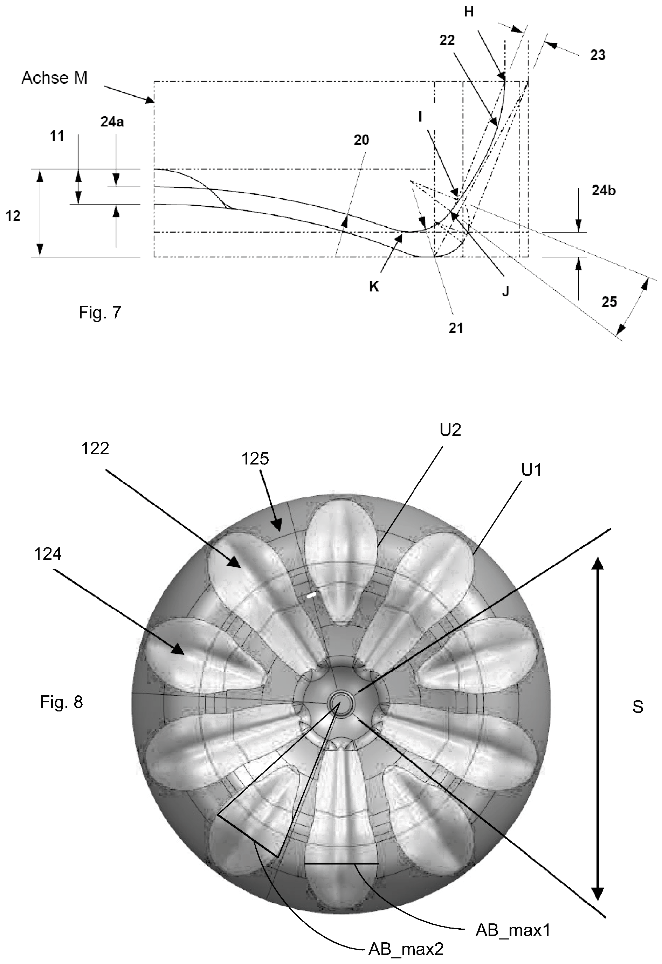

Aus dieser Kontur wird, die in der Fig. 8 gezeigte sogenannte Außenfläche AF der Bodengeometrie bzw. des Bodenabschnitts 106 durch eine Rotation um die Rotationsachse M erzeugt.

Die Übergänge der genannten Radien (bei denen es sich insbesondere um Krümmungsradien handelt) d.h. des kleinen Domradius 1, des Radius 2, des Außen - Domradius 3, des Innen Fußradius 4 und Fußradius 6, sind wenigstens zum Teil und bevorzugt alle tangentenstetig. Der Übergang von Fußradius 6 zu dem Spline 7, kann krümmungsstetig, mindestens aber tangentenstetig sein. Der Spline 7 geht bevorzugt krümmungsstetig, besonders bevorzugt mindestens tangentenstetig, in den Außendurchmesser 128 (vgl. Fig. 3) über. Der Krümmungsverlauf des Splines 7 kann durch ein Polynom n-ten Grades beschrieben werden, wobei n bevorzugt größer oder gleich 2 und kleiner 7 ist.

Die Außendimensionen des Bodens werden durch den Außendurchmesser 8 und die Bodenhöhe 9 festgelegt. Das Maß des Standkreisdurchmessers 10 wird bevorzugt durch ein Verhältnis zu dem Außendurchmesser 8 festgelegt. Dieses Verhältnis kann sich beispielsweise zwischen 0,615 und 0,935 bewegen, insbesondere zwischen 0,62 und 0,69.

Die Gerade bzw. Strecke AE (vgl. Fig. 3) kann eine Länge zwischen 0,01mm und 3,0mm haben oder wird bevorzugt durch ein Verhältnis zu dem Außendurchmesser 8 angegeben. Der Innen - Fußradius 4 kann gleich groß, größer oder kleiner als der Fußradius 6 sein. Der Fußradius kann auch über ein Verhältnis zu dem Außendurchmesser 8 definiert werden.

Die Höhe 12 des kleinen Domradius 1 und die Höhe 11 des Außen Domradius 3 werden bevorzugt beide durch unterschiedliche Verhältnisse zu dem Außendurchmesser 8 beschrieben.

Der Anfangspunkt D des Splines 7 (betrachtet ausgehend von der geometrischen Mitte des Bodenabschnitts) wird hier durch eine Gerade zwischen B und C erzeugt. Die Gerade BC ist hier tangential am Fußradius. Der Anfangspunkt D des Splines 7 kann mit Hilfe eines Winkels 13 auf dem Fußradius 6 zwischen den Punkten A und C bestimmt werden.

Das Abstandsmaß 14 wird zur Abstandsdefinition der Ausbuchtungsausschnittsgeometrien verwendet.

Damit setzt sich bei der in den Figuren 2 - 3 gezeigten Ausgestaltung des Bodenabschnitts dieser aus wenigstens zwei unterschiedlich gekrümmten Bereichen sowie einem geradlinig verlaufenden Abschnitt sowie einem sich hieran anschließenden Spline zusammen. Der Bodenabschnitt ist insgesamt, wie oben erwähnt, kreisförmig ausgebildet.

Die hier beschriebene äußere Basiskontur, auch als "Basiskontur Außen" bezeichnet, bezieht sich auf die Außenhaut des Bodens und ist beispielsweise in Fig. 7 durch die Kontur zwischen dem Bezugszeichen 11 und bis hoch zu dem Bezugszeichen 23 dargestellt. Insbesondere handelt es sich hierbei um die Bereiche bzw. Abschnitte außerhalb der Ausbuchtungen bzw. Rillen.

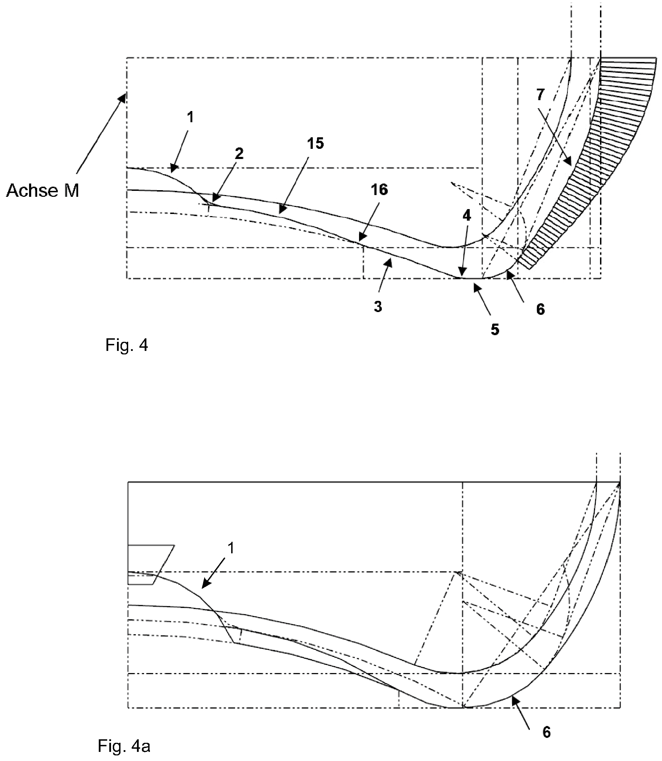

Die Fig. 4 - 6 zeigen eine äußere Basiskontur für eine weitere vorteilhafte Ausgestaltung eines erfindungsgemäßen Behältnisses. Es wird darauf hingewiesen, dass die bei der in den

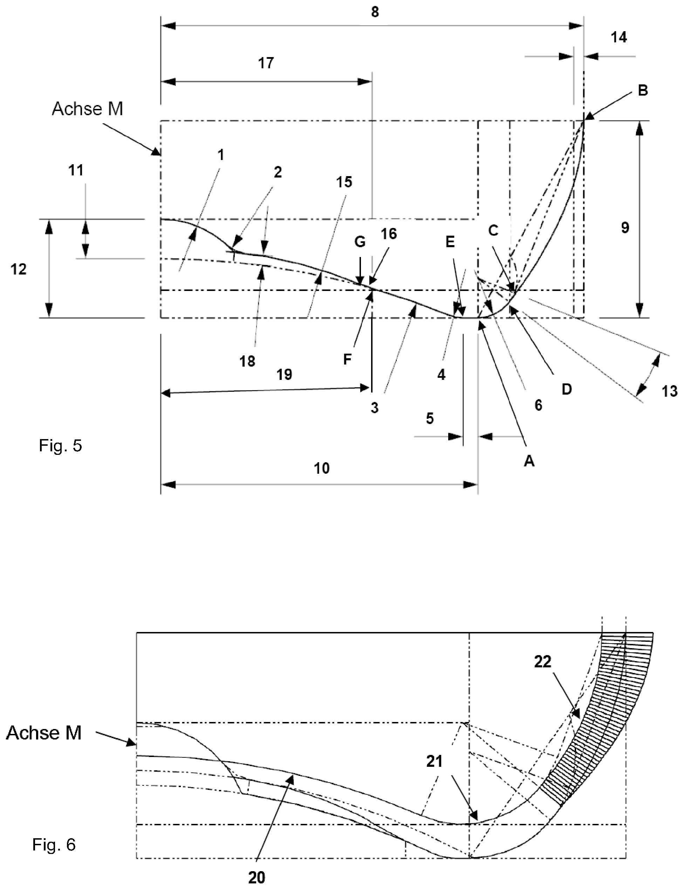

Figuren 2 und 3 und die bei der in den Figuren 4 und 5 gezeigten Merkmale auch miteinander verbunden und/oder kombiniert werden können, um zu weiteren möglichen und im Rahmen dieser Erfindung liegenden Ausgestaltungen zu gelangen.

Die Figuren 4 und 5 beschreiben insbesondere eine Ausgestaltung unter Verwendung eines Doppeldoms (genauer gesagt einer Struktur mit zwei domartigen Unterstrukturen bei Außerachtlassung der domartigen Struktur des Zentralbereichs):
Diese Variante der Basiskontur Außen wird (vgl. Fig. 4) durch den kleinen Domradius 1, den Radius 2, den Innen - Domradius 15, den Verbindungsradius 16, den Außen Domradius 3, den Innen Fußradius 4, der Geraden 5, den Fußradius 6 und einem Spline 7 beschrieben. Aus dieser Kontur wird die sogenannte Außenfläche AF (vgl. Fig. 8) der Bodengeometrie durch eine Rotation um die Rotationsachse M erzeugt.

Damit sind hier neben der ersten domartigen Struktur 130 des Zentralbereichs noch eine zweite domartige Struktur 140 (gegeben durch den Innendomradius 15) sowie eine dritte domartige Struktur (gegeben durch den Außendomradius 3 des Übergangsbereichs) vorhanden, wobei sich diese dritte domartige Struktur 126 in radialer Richtung R nach außen an die zweite domartige Struktur anschließt. Die zweite domartige Struktur und die dritte domartige Struktur bilden damit einen Doppeldom aus.

Die Krümmungsradien dieser beiden domartigen Strukturen unterscheiden sich dabei jedoch nur geringfügig und ihr Verhältnis liegt in einem Bereich zwischen 0,2 und 0,9, insbesondere zwischen 0,3 und 0,85.

Die Übergänge der Radien, kleiner Domradius 1, Radius 2, Innen Domradius 15, Verbindungsradius 16, Außen Domradius 3, Innen Fußradius 4, Fußradius 6, sind wenigstens zum Teil und bevorzugt alle tangentenstetig. Der Übergang von dem Fußradius 6 zu dem Spline 7 kann krümmungsstetig, mindestens aber tangentenstetig sein. Der Spline 7 geht krümmungsstetig, mindestens tangentenstetig, in den Außendurchmesser 8 bzw. 128 über. Der Krümmungsverlauf des Splines 7 kann durch ein Polynom n-ten Grades beschrieben werden, wobei n größer oder gleich 2 und kleiner als 7 ist.

Die Außendimensionen des Bodens werden durch den Außendurchmesser 8 und die Bodenhöhe 9 festgelegt. Das Maß des Standkreisdurchmessers 10 wird durch ein Verhältnis zu dem Außendurchmesser 8 festgelegt. Dieses Verhältnis kann sich zwischen 0,615 und 0,935 bewegen, insbesondere zwischen 0,62 und 0,69.

Die Höhe des Innen Domradius 15 zum Außen Domradius 3 wird über das Abstandsmaß 18 (vgl- Fig. 5) definiert, welches insbesondere zwischen 0,4 mm und 3,0 mm liegt. Der Verbindungsradius 16 kann einen Wert zwischen 1,0 mm und 20 mm, insbesondere zwischen 3,0 mm und 15,0 mm haben. Der Verbindungsradius 16 schließt im Punkt G an den Innen Domradius 15 an und geht im Punkt F in den Außen Domradius 3 über.

Das Maß 19 des Innen Domdurchmessers am Punkt F wird durch ein Verhältnis zum Außendurchmesser 8 festgelegt. Dieses Verhältnis kann sich zwischen 0,2 und 0,75 bewegen, insbesondere zwischen 0,3 und 0,65.

Die Gerade AE kann eine Länge zwischen 0,01 mm und 3,0 mm, insbesondere zwischen 0,5 mm und 1,5 mm haben oder wird durch ein Verhältnis zum Außendurchmesser angegeben. Der Innenradius 4 kann gleich groß, größer oder kleiner als der Fußradius 6 sein. Der Fußradius kann auch über ein Verhältnis zum Außendurchmesser 8 definiert werden.

Die Höhe 12 des kleinen Domradius und die Höhe 11 des Außen Domradius werden beide durch unterschiedliche Verhältnisse zum Außendurchmesser 8 beschrieben. Der Anfangspunkt D des Splines 7 wird durch eine Gerade zwischen B und C erzeugt. Die Gerade BC ist tangential am Fußradius. Der Anfangspunkt D des Splines 7 kann mit Hilfe eines Winkels 13 auf dem Fußradius 6 zwischen den Punkten A und C bestimmt werden. Das Abstandsmaß 14 wird zur Abstandsdefinition der Rillenausschnittsgeometrien verwendet.

Die Figuren 6 und 7 beschreiben eine innere Basiskontur bzw. eine "Basiskontur - innen". Hierbei handelt es sich um die Kontur des Bodens, in der die unten noch genauer gezeigten Rillen bzw. Verstärkungsausbuchtungen angeordnet sind, wie beispielsweise in Fig. 7 zwischen den Bezugszeichen 24a und H erkennbar.

Die innere Basiskontur bzw. die Basiskontur Innen wird durch den Innenkontur - Domradius 20, den Innenkontur Fußradius 21 und einen Spline 22 beschrieben. Aus dieser Kontur wird die sogenannte Innenfläche der Bodengeometrie durch eine Rotation um die Rotationsachse M erzeugt.

Die Übergänge der Radien, Innenkontur Domradius 20, Innenkontur Fußradius 21 sind wenigstens zum Teil und bevorzugt alle tangentenstetig zueinander ausgebildet. Der Übergang von dem Innenkontur Fußradius zu dem Spline 22 kann bevorzugt krümmungsstetig sein, insbesondere mindestens aber tangentenstetig sein. Der Spline 22 geht bevorzugt krümmungsstetig, mindestens jedoch tangentenstetig, in eine Gerade, die bevorzugt parallel zu Außendurchmesser 8 ist in dem Punkt H über. Die Gerade HI (Fig.7) ist bevorzugt parallel zu der in Fig. 3 gezeigten Gerade BC und der Abstand beider Geraden kann über das Maß bzw. den Abstand 23 definiert werden.

Der Krümmungsverlauf des Splines 22 für die Innenkontur kann durch ein Polynom n-ten Grades beschrieben werden, wobei n insbesondere größer oder gleich 2 und kleiner als 7 ist.

Der Abstand zwischen der Basiskontur Innen und der Basiskontur Außen wird über das Maß 24a von der Innenkontur Domradius bis zu der Außenkontur Domradius definiert. Der Abstand zwischen der Basiskontur Innen (Punkt K) und der Basiskontur Außen (Punkt A in Fig. 3) wird auf Höhe des Standkreisdurchmessers über das Maß 24b definiert. Die Abstände zwischen der Basiskontur Innen und der Basiskontur Außen sind bevorzugt im Zentrum und auf Höhe des Standkreisdurchmessers variabel.

Hier sind folgende 3 Varianten einstellbar (vgl. Fig. 7):
Bei der ersten Variante sind diese Maße 24a und 24b gleich, bei der zweiten Variante ist das Maß 24a kleiner als das Maß 24b und bei der dritten Variante ist das Maß 24a größer als das Maß 24b

Der Abstand zwischen der Basiskontur Innen und der Basiskontur Außen kann zwischen dem Standkreisdurchmesser 10 und dem Außendurchmesser 8 über das Abstandsmaß 23 zwischen den Punkten H und B (Fig.3) definiert werden. Es ist möglich die Abstände 24b und 23 zwischen der Basiskontur Innen und der Basiskontur Außen zu variieren, insbesondere in Kombination mit den Varianten der Abstände 24a und 24b.

Dabei kann das Maß bzw. der Abstand 24b gleich, größer oder kleiner in Bezug auf das Abstandsmaß 23 sein.

Der Anfangspunkt J des Splines, wird bevorzugt durch eine Gerade zwischen den Punkten H und I erzeugt. Die Gerade HI ist tangential am Innenkontur Fußradius 21. Der Anfangspunkt J des Splines kann mit Hilfe eines Winkels 25 auf dem Innenkontur Fußradius 21 zwischen den Punkten I und K bestimmt werden. Das Maß des Innenkontur Fußradius 21 kann in einem Verhältnis zum Fußradius der Außenkontur 6 (vgl. Fig. 2 und 3) angegeben werden.

Fig. 8 zeigt eine Draufsicht auf einen Bodenabschnitt des Behältnisses. Man erkennt, dass hier 5 erste Verstärkungsausnehmungen 122 bzw. Rillen und 5 zweite Verstärkungsausnehmungen 124 bzw. Rillen vorgesehen sind, die in einer Umfangsrichtung des Bodenabschnitts abwechselnd zueinander angeordnet sind. Dabei erstrecken sich die ersten Verstärkungsausbuchtungen in den Zentralbereich 112 hinein, die zweiten, in radialer Richtung R kürzeren Ausbuchtungen 124 hingegen nicht. Wie in Figur 8 gezeigt, können Rillensegmente S gebildet bzw. definiert werden. Das Bezugszeichen AuFl kennzeichnet die Außenfläche des Bodenabschnitts, in der die Verstärkungsausnehmungen ausgebildet sind

Das Bezugszeichen U1 zeigt eine Umrandung der ersten Verstärkungsausbuchtungen 122 und das Bezugszeichen U2 eine Umrandung der zweiten Verstärkungsausbuchtungen 124. Die Umrandung U2 der zweiten Verstärkungsausbuchten schließt dabei die jeweilige Verstärkungsausbuchtung vollständig ein. Die Umrandung der ersten Verstärkungsausbuchtungen kann diese jeweils vollständig umgeben oder aber in einem kleinen Abschnitt, der auf den Anspritzpunkt weist und/oder am weitesten innen liegt unterbrochen sein.

Das Bezugszeichen AB_max1 bezieht sich auf eine maximale Breite bzw. einen Abschnitt maximaler Breite der ersten Verstärkungsausbuchtungen. Das Bezugszeichen AB_max2 bezieht sich auf eine maximale Breite bzw. einen Abschnitt maximaler Breite der ersten Verstärkungsausbuchtungen.

Diese maximalen Breiten können jeweils auch durch einen Mittelpunktswinkel ausgehend von dem Zentrum des Bodenabschnitts definiert werden (hier durch die beiden Hilfslinien an der ersten Verstärkungsausbuchtung 122 veranschaulicht. Wie oben ausgeführt, beträgt dieser Winkel mindestens 20° insbesondere sowohl für die ersten Verstärkungsausbuchtungen 122 als auch für die zweiten Verstärkungsausbuchtungen 124.

Man erkennt hier auch insbesondere an der zweiten Verstärkungsausbuchtung die birnenartige Gestalt der Umrandung, wie sie oben beschrieben wurde. Doch auch die Umrandung der ersten Verstärkungsausbuchtung kann als birnenartig beschrieben werden.

Ein Rillensegment S besteht aus einer langen (122) und einer kurzen (124) Rille bzw. Verstärkungsausbuchtung. Der Boden kann eine Anzahl von minimal 3 Rillensegmenten bis maximal 8 Rillensegmenten am Umfang beinhalten. Die Größe des Öffnungswinkels eines Rillensegements ergibt sich aus der verwendeten Anzahl an langen Rillen 122 (360°/Anzahl).

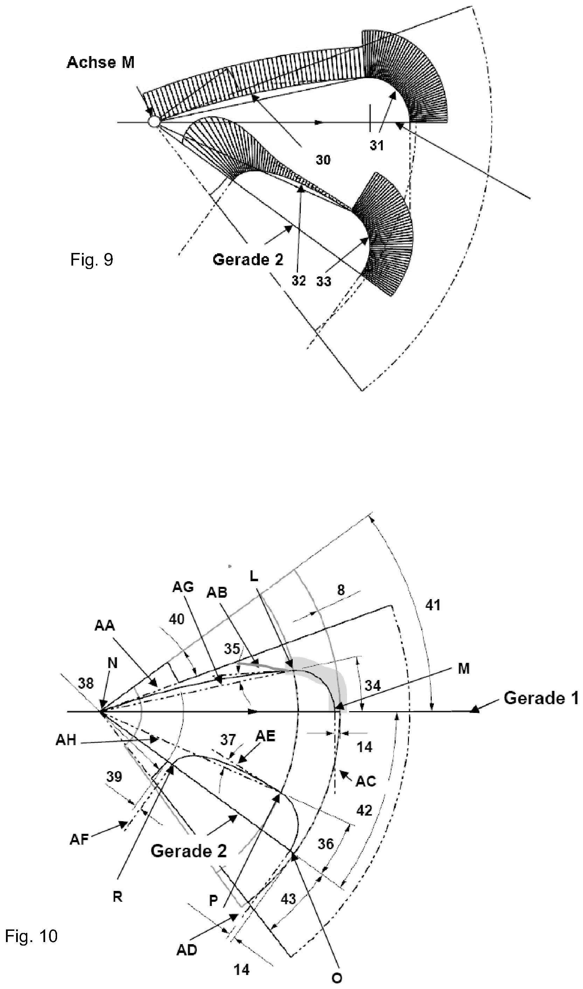

Die Fig. 9 und 10 veranschaulichen die Geometrie der Verstärkungsausbuchtungen insbesondere der längeren Verstärkungsausbuchtungen bzw. Rillen 122. Es wird hier darauf hingewiesen, dass im Rahmen der vorliegenden Anmeldung die beiden Begriffe Rillen und Ausbuchtungen synonym verwendet werden.

Die Ausschnittsgeometrie für die lange Verstärkungsausbuchtung 122 wird durch den Spline 30 und den Spline 31 beschrieben (vgl. Fig. 9).

Der Spline 30 ist vorteilhaft im Punkt N (Fig.10) tangentenstetig zur Hilfsgeraden AA (Fig. 10) und im Punkt L tangentenstetig zur Hilfsgeraden AB. Der Spline 31 ist im Punkt L tangentenstetig zur Hilfsgeraden AB und im Punkt M tangentenstetig zur Hilfsgeraden AC.

Dabei sind hier auch die jeweiligen Krümmungsradien durch die jeweils senkrecht von den Linien abstehenden senkrechten Linien veranschaulicht. Je länger diese Linien sind, desto kleiner ist der jeweilige Krümmungsradius. Auch die in dieser Figur dargestellten Linien ergeben sich wieder aus einer Projektion in einer radialen und senkrecht zu der Längsrichtung des Behältnis stehenden Richtung. Man erkennt, dass die erste Verstärkungsausbuchtung durch einen ersten mit einem vorgegebenen größeren Krümmungsradius gebildeten Bereich 30und einen zweiten, sich an den ersten Bereich anschließenden Bereich 31 mit einem zweiten Krümmungsradius gebildet wird. Dabei ist der zweite Krümmungsradius kleiner als der erste Krümmungsradius (vgl. Fig. 9).

Bevorzugt ist der erste Krümmungsradius in dem Bereich 30 und besonders bevorzugt auch der zweite Krümmungsradius in dem Bereich 31 im Wesentlichen konstant.

Im Falle der zweiten Verstärkungsrippe 124 liegt betrachtet von innen nach außen zunächst ein hoher Krümmungsradius vor, der sich radial nach außen verringert (Bereich 32). In dem sich daran anschließenden Bereich 33 ist der Krümmungsradius gleich oder im Wesentlichen gleich dem Krümmungsradius in dem Bereich 31. Die geometrische Struktur der beiden Bereiche 31 und 33 ist ähnlich und bevorzugt im Wesentlichen identisch.

Die Krümmungsverläufe der Splines 30 und 31 können durch ein Polynom n-ten Grades beschrieben werden, wobei n größer gleich 2 und bevorzugt kleiner 7 ist. Die Ausbuchtungsausschnittsgeometrie für die lange Verstärkungsausbuchtung 122 ist bevorzugt spiegelsymmetrisch an der Geraden G1. Die Ausprägung des Spline 30 wird bevorzugt über eine kegelförmige Profilsteuerung mit einem vorgegebenen Rho-Wert erzeugt. Dieser Wert kann sich zwischen 0,01 und 0,99 bewegen, insbesondere zwischen 0,2 und 0,8.

Die Ausprägung des Spline 31 wird über eine kegelförmige Profilsteuerung mit einem Rho-Wert erzeugt. Dieser Wert kann sich zwischen 0,01 und 0,99 bewegen, insbesondere zwischen 0,2 und 0,6.

Die Hilfsgerade AC steht senkrecht auf der Geraden 1 im Punkt M. Der Punkt M kann sich von der Rotationsachse M aus betrachtet zwischen dem Maß des Standkreisdurchmessers 10 und dem Maß des Außendurchmessers 8 bewegen und wird über das Maß 14 (Fig.2 und Fig.10) definiert.

Der Punkt L bewegt sich auf der Hilfsgerade AG mit dem Öffnungswinkel 34 auf der Radienbahn des Punktes D (Fig.3 und Fig.5) der Basiskontur Außen. Dieser Öffnungswinkel liegt bevorzugt zwischen 5° und 40°, bevorzugt zwischen 10° und 20°.

Die Breite der langen Rille wird über den Winkel 34 definiert. Die Hilfsgerade AB beginnt im Punkt L und wird mit dem Winkel 35 gesteuert. Die Hilfsgerade AA beginnt im Punkt N und wird mit dem Winkel 40 gesteuert. Über die Winkel 35,40 und den dazugehörigen Rho-Wert wird das Profil des Splines 30 gesteuert. Über die Winkel 34, 35 und dazugehörigen Rho-Wert wird das Profil des Splines 31 gesteuert, wobei der Winkel 35 zwischen 1° und 30°, bevorzugt zwischen 3° und 15° liegt, und der Winkel 40 zwischen 5° und 40°, bevorzugt zwischen 10° und 20° liegt.

Die Ausbuchtungsausschnittsgeometrie für die zweite bzw. kurze Verstärkungsausbuchtung 124 wird durch den Spline 32, und den Spline 33 beschrieben. Der Spline 32 ist bevorzugt in dem Punkt R tangentenstetig zu der Hilfsgeraden AF und in dem Punkt P tangentenstetig zu der Hilfsgeraden AE. Der Spline 33 ist in dem Punkt P tangentenstetig zur Hilfsgeraden AE und in dem Punkt O tangentenstetig zu der Hilfsgeraden AD.

Die Krümmungsverläufe der Splines 32 und 33 können durch ein Polynom n-ten Grades beschrieben werden, wobei n größer gleich 2 und bevorzugt kleiner 7 ist. Die Ausbuchtungsausschnittsgeometrie für die kurze Rille ist spiegelsymmetrisch an der Geraden 2. Die Ausprägung des Spline 32 wird über eine kegelförmige Profilsteuerung mit einem Rho-Wert erzeugt. Dieser Wert kann sich zwischen 0,01 und 0,99 bewegen, insbesondere zwischen 0,1 und 0,7. Die Ausprägung des Spline 33 wird über eine kegelförmige Profilsteuerung mit einem Rho-Wert erzeugt. Dieser Wert kann sich zwischen 0,01 und 0,99 bewegen, insbesondere zwischen 0,2 und 0,6.

Die Gerade G2 wird über den Winkel 42 gesteuert, dieser ist definiert mit der Hälfte des Öffnungswinkels eines Rillensegments. Die Hilfsgerade AD steht bevorzugt im Wesentlichen und besonders bevorzugt senkrecht auf der Geraden G2 im Punkt O. Der Punkt O kann sich von der Rotationsachse (Achse M) aus betrachtet zwischen dem Maß des Standkreisdurchmessers 10 (Fig. 3) und dem Maß des Außendurchmessers 8 (Fig. 3) bewegen und wird über das Maß 14 (Fig.3 und Fig.10) definiert.

Der Punkt P bewegt sich auf der Hilfsgerade AH mit dem Öffnungswinkel 36 auf der Radienbahn des Punktes D (Fig.3 und Fig.5) der Basiskontur Außen. Die Breite der kurzen Rille wird über den Winkel 36 definiert, wobei der Winkel 36 bevorzugt zwischen 5° und 40°, besonders bevorzugt zwischen 10° und 20° liegt. Die Hilfsgerade AE beginnt im Punkt P und wird mit dem Winkel 37 gesteuert, wobei der Winkel 37 bevorzugt zwischen 1° und 30°, besonders bevorzugt zwischen 3° und 15° liegt. Die Hilfsgerade AF beginnt im Punkt R und steht senkrecht auf der Geraden 2. Über die Winkel 37 und den dazugehörigen Rho-Wert wird das Profil des Splines 32 gesteuert. Über die Winkel 37 und dazugehörigen Rho-Wert wird das Profil des Splines 33 gesteuert.

Der Punkt R wird über den Abstand 39 zum Radius 38 definiert. Der Radius 38 steht in einem Verhältnis zum kleinen Domradius 1 (Fig. 3 und 5). Die Winkel 34 und 36, zur Steuerung der Breite der kurzen und langen Rille können gleich oder unterschiedlich groß sein. Die Winkel 35 und 37, zur Steuerung der Hilfsgeraden AB und AE, können gleich oder unterschiedlich groß sein.

Die Rho-Werte der Splines 31 und 33 können gleich oder unterschiedlich groß sein.

Die Rho-Werte der Splines 30 und 32 können gleich oder unterschiedlich groß sein.

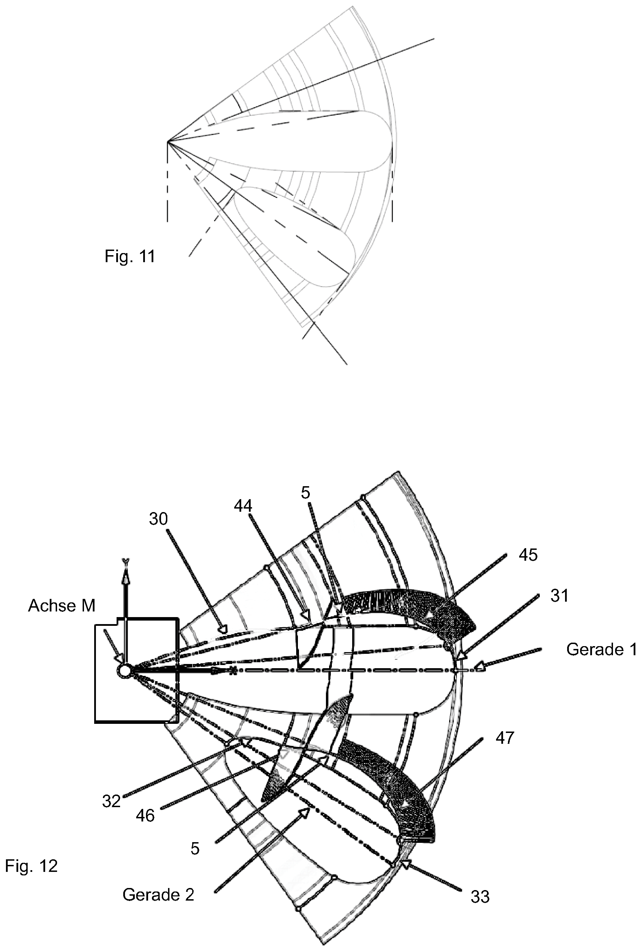

In Fig. 11 sieht man einen Zwischenschritt von der Rillenausschnittsgeometrie auf diese wird die erweiterte Ausbuchtungsausschnittsgeometrie wie nachfolgenden beschrieben aufgesetzt.

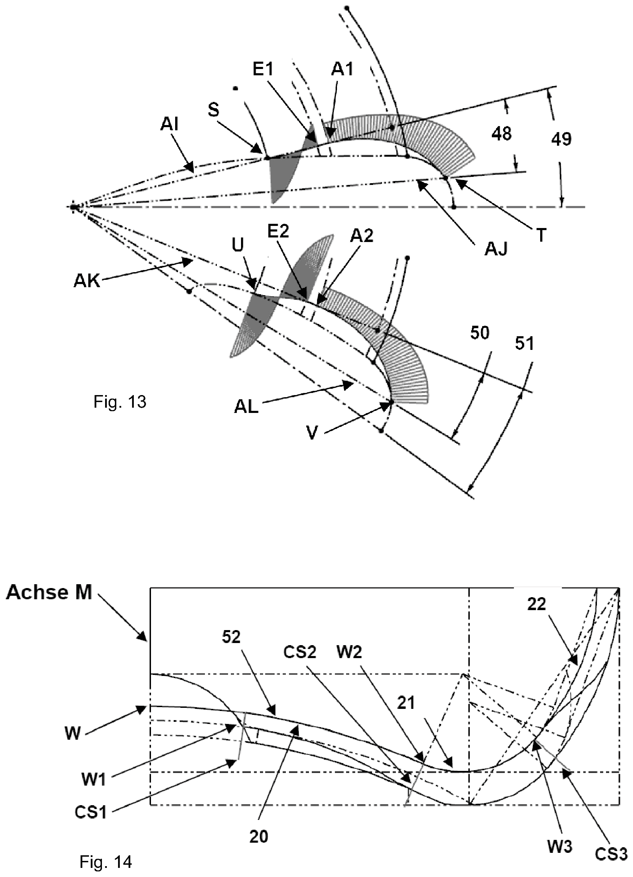

Auf die Ausbuchtungsausschnittsgeometrie (Fig. 10, 11) wird die erweiterte Rillenausschnittsgeometrie (vgl. Fig. 12 und Fig. 13) aufgebaut.

Die erweiterte Ausbuchtungsausschnittsgeometrie für die lange Ausbuchtung wird beschrieben, durch den Spline 44, eine Projektion der Geraden 5 (vgl. Fig. 2 - 4) und den Spline 45, Fig. 12).

Der Spline 44 ist bevorzugt im Punkt S (Fig. 13) tangentenstetig zu dem Spline 30 (Fig.12) und im Punkt E1 (Fig. 13) tangentenstetig. Der Übergang im Punkt S und E1 kann krümmungsstetig, mindestens aber tangentenstetig sein. Die senkrechte Projektion der Geraden 5 mit den Punkten E und A in die Skizzenebene, auf der Hilfsgeraden Al (Fig. 13) erfolgt bevorzugt aus der Außenfläche. Die Punkte E1 und A1 bewegen sich auf der Hilfsgerade Al (Fig. 13) mit dem Öffnungswinkel 49 (Fig. 13) auf der Radienbahn der Punkte E und A der Basiskontur Außen.

Bevorzugt liegt dieser Winkel 49 zwischen 9° und 18° bevorzugt zwischen 9,25° und... 17,75°

Die Krümmungsverläufe der Splines 44 und 45 können durch ein Polynom n-ten Grades beschrieben werden, wobei bevorzugt n größer gleich 2 und kleiner 7 ist. Die Ausbuchtungsausschnittsgeometrie für die lange Ausbuchtung ist bevorzugt spiegelsymmetrisch an der Geraden 1 bzw. zu einer Ebene, welche durch die Gerade 1 und die Längsrichtung des Kunststoffbehältnisses aufgespannt wird.

Der Punkt T bewegt sich auf der Hilfsgerade AJ mit dem Öffnungswinkel 49 (Fig. 13) auf dem Spline 31 (Fig. 9) zwischen den Punkten L und M (Fig. 10) der Ausbuchtungsausschnittsgeometrie. Die Breite der langen bzw. ersten Verstärkungsausbuchtung wird über den Winkel 49 definiert.

Die Hilfsgerade AJ beginnt im Zentrum bzw. Punkt N (Fig.10) oder Punkt L und wird mit dem Winkel 48 (Fig. 13) gesteuert.

Bevorzugt liegt dieser Winkel 48 zwischen 0,25° und 17,50°.

Die erweiterte Ausbuchtungdsausschnittsgeometrie für die kurze bzw. zweite Ausbuchtung wird beschrieben, durch den Spline 46 (Fig.12), einer Projektion der Geraden 5 (Fig.2,3) und den Spline 47, (Fig.12).

Der Spline 46 (Fig.12) ist bevorzugt im Punkt U (Fig. 13) tangentenstetig zu Spline 32 (Fig.12) und im Punkt E2 (Fig. 13) bevorzugt tangentenstetig. Der Übergang im Punkt U und E2 kann krümmungsstetig, bevorzugt mindestens aber tangentenstetig sein. Die senkrechte Projektion der Geraden 5 mit den Punkten E und A in die Skizzenebene, auf der Hilfsgeraden AK (Fig. 13) erfolgt bevorzugt aus der Außenfläche (Fig. 8).

Die Punkte E2 und A2 bewegen sich auf der Hilfsgerade AK (Fig. 13) mit dem Öffnungswinkel 51 auf den Radienbahn der Punkte E und A der Basiskontur Außen.

Bevorzugt liegt dieser Winkel 51 zwischen 9,25° und 17,75°.

Die Krümmungsverläufe der Splines 46 und 47 kann durch ein Polynom n-ten Grades beschrieben werden, wobei n größer gleich 2 und kleiner 7 ist. Die Ausbuchtungsausschnittsgeometrie für die kurze Ausbuchtung ist spiegelsymmetrisch an der Geraden 2 .

Der Punkt V bewegt sich auf der Hilfsgerade AL mit dem Öffnungswinkel 50 (Fig. 13) auf dem Spline 31 (Fig. 9) zwischen den Punkten L und M der Ausbuchtungsausschnittsgeometrie. Die Breite der kurzen Ausbuchtung wird über den Winkel 51 definiert. Die Hilfsgerade AL beginnt im Zentrum bzw. Punkt N oder Punkt L und wird bevorzugt mit dem Winkel 50 (Fig.13) gesteuert.

Bevorzugt liegt dieser Winkel 50 zwischen 0,25° und17,5°.

Unter Bezugnahme auf die nachfolgenden Figuren wird die Ausbuchtungskammgeometrie der einzelnen Ausbuchtungen beschrieben.

Die Ausbuchtungskammgeometrie hat als Basis den Spline 52 (Fig. 14) der Basiskontur Innen, die oben beschriebene Basiskontur Innen wird beschrieben durch den Innenkontur Domradius 20, den Innenkontur Fußradius 21 und einem Spline 22 (Fig. 6)

Auf diesem Spline 52 wird an bestimmten Punkten oder an Punkten, die durch einen als Prozentsatz der Kurvenlänge der Basiskontur Innen definiert werden mit Startpunkt W (Abb.15) auf der Rotationsachse M die Kammgeometrie erläutert bzw. definiert.

Der Punkt W1 liegt auf dem Spline der Basiskontur Innen auf Höhe des Übergangspunkts bzw. Schnittpunkts des kleinen Domradius 1, (Fig.3 und Fig.14), und dem Innen Domradius 15. Im dem Punkt W1 wird eine Ebene CS1 senkrecht zum Kurvenverlauf bzw. ein Koordinatensystem aufgebaut und auf der Ebene die Kontur des Kamms Kk1, (Fig.15) der Rillengeometrie für diesen Bereich aufgebaut.

Dies wurde oben als eine in einer Projektion entlang einer Symmetrielinie der Verstärkungsausbuchtung und/oder in einer Abwicklung in einer Umfangsrichtung des Bodenabschnitts verlaufende Ebene bzw. Linie bezeichnet,

Der Punkt W2 liegt auf dem Spline der Basiskontur Innen auf Höhe des Übergangspunkts bzw. Schnittpunkts von Innenkontur Domradius 20 (Fig.14) und Innenkontur Fußradius 21 (Fig. 15).

In dem Punkt W2 wird eine Ebene CS2 senkrecht zum Kurvenverlauf bzw. ein Koordinatensystem aufgebaut und auf der Ebene die Kontur des Kamms Kk2 (Fig. 15) der Rillengeometrie für diesen Bereich aufgebaut.

Der Punkt W3 liegt auf dem Spline der Basiskontur Innen auf Höhe des Übergangspunkt bzw. Schnittpunkt von Innenkontur Fußradius 21 (Fig.14) und des Spline 22 (Fig.14).

Im dem Punkt W3 wird eine Ebene CS3 senkrecht zum Kurvenverlauf bzw. ein Koordinatensystem aufgebaut und auf der Ebene die Kontur des Kamms Kk3 (Fig. 15) der Rillengeometrie für diesen Bereich aufgebaut.

Fig. 15 zeigt damit eine Darstellung zur Veranschaulichung der Ausbuchtungskammgeometrie. Die Fig. 16 - 18 zeigen entsprechende Dreiecke der jeweiligen Kammgeometrien. Bei der Bezeichnung als Dreieck wird außer Acht gelassen, dass sich an der jeweiligen Spitze keine Ecke, sondern eine Krümmung befindet.

Die in Fig. 16 - 18 gezeigten Dreiecke werden maßgeblich durch den Winkel an der Spitze (d.h. im Boden der Ausbuchtung) bestimmt, der sich bei einer Fortsetzung der beiden Schenkel ergeben würde. Ein weiterer charakteristischer Wert für die Dreiecke ist die Krümmung an der Spitze bzw. im Boden der jeweiligen Ausbuchtung.

Die Ausbuchtungskammgeometrie wir wird durch ein bevorzugt gleichseitiges Dreieck mit einem Radius 53 (Fig. 16), an der "Spitze" beschrieben. Die Höhe des Dreiecks wird über das Maß 55 und der Eröffnungswinkel über das Maß 54 definiert. Gleiches gilt für die in Fig. 17 und 18 gezeigten Dreiecke gilt entsprechendes mit den Radien 56 und 59, den Höhen 58 und 61 und den Eröffnungswinkel 57 und 60.

Die Maße für die Kammgeometrien Kk1, Kk2 und Kk3 können gleich, aber auch unterschiedlich sein.

Folgende Varianten sind dabei denkbar:
Bei einer Variante 1sind die Radien 53, 56 und 59 gleich. Auch die Winkel 54, 57 und 60 sind gleich und auch die Höhen 55, 58 und 61 sind gleich.

Bei einer Variante 2 ist der Radius 53 kleiner als der Radius 56 und der Radius 56 ist kleiner als der Radius 59. Auch der Winkel 54 ist kleiner als der Winkel 57 und der Winkel 57 ist kleiner als der Winkel 60. Die Höhe 55 ist kleiner als die Höhe 58 und die Höhe 58 ist kleiner als die Höhe 61. Diese Situation ist im Vergleich der Fig. 16 - 18 gezeigt.

Bei einer Variante 3 ist der Radius 53 größer als der Radius 56 und der Radius 56 ist größer als der Radius 59. Auch der Winkel 54 ist größer als der Winkel 57 und der Winkel 57 ist größer als der Winkel 60. Die Höhe 55 ist größer als die Höhe 58 und die Höhe 58 ist größer als die Höhe 61.

Bei einer Variante 4 ist der Radius 53 größer als der Radius 56 und der Radius 56 ist größer als der Radius 59. Der Winkel 54 ist gleich dem Winkel 57 und beide Winkel sind kleiner als der Winkel 60. Die Höhen 55,58 und 61 sind hier gleich.

Bei einer Variante 5 sind die Radien 53, 56 und 59 gleich, der Winkel 54 ist gleich dem Winkel 57 und beide Winkel sind kleiner als der Winkel 60. Die Höhen 55,58 und 61 sind hier gleich.

Bei einer Variante 6 sind die Radien 53 und 56 gleich und kleiner als der Radius 59. Die Winkel 54 und 57 sind gleich und kleiner als der Winkel 60 und die Höhen 55, 58 und 61 sind gleich.

Bei einer Variante 7 sind die Radien 53, 56 und 59 gleich. Die Winkel 54 und 57 sind gleich und kleiner als der Winkel 60 und die Höhen 55, 58 und 61 sind gleich.

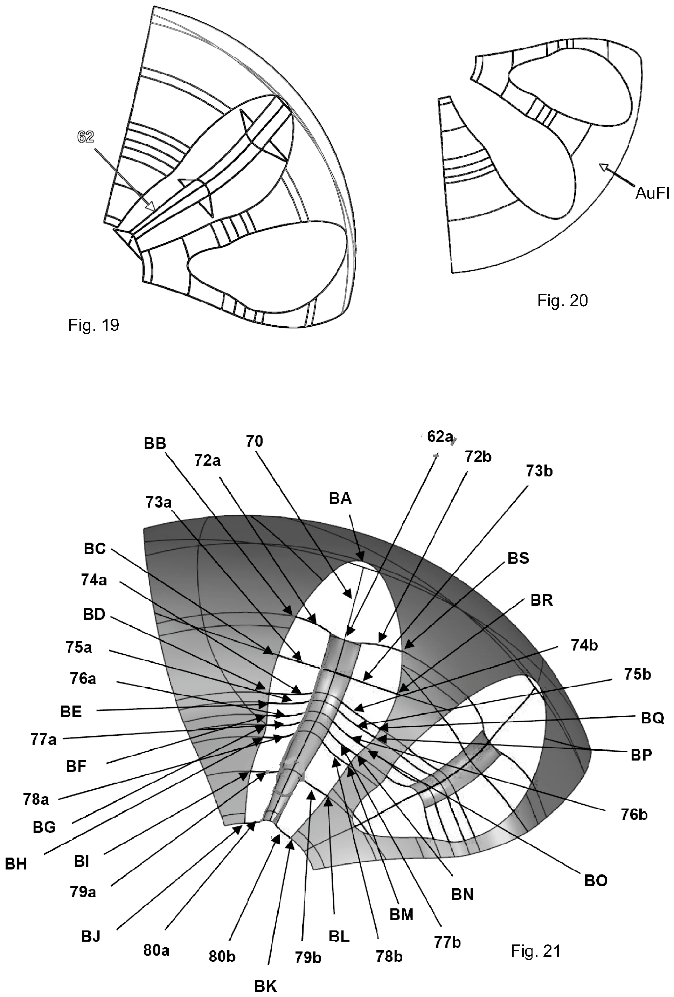

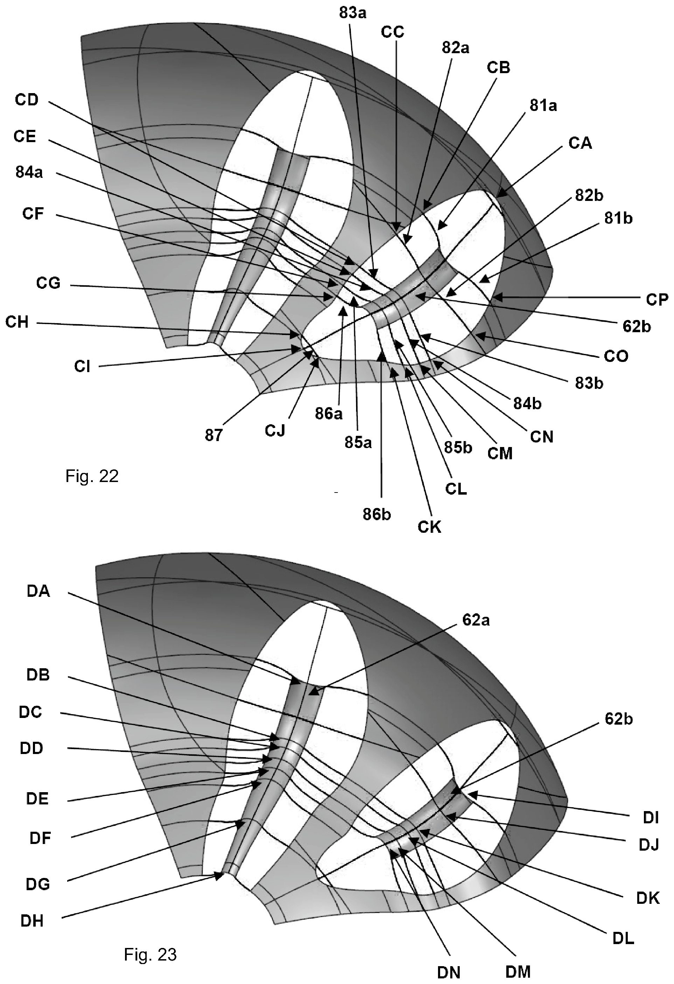

Über die Basiskontur Innen, Spline 52, (Fig. 15), und die Kammgeometrien KK1, KK2 und KK3 wird eine Hilfsfläche KF 62 (Fig. 19) erzeugt. Für die lange Ausbuchtung wird diese an der Hilfsflächen DA (Fig. 23) getrimmt und zur Hilfsfläche KFL 62a (Fig. 21). Für die kurze Ausbuchtung wird die gleiche Hilfsfläche verwendet, aber an den konstruktionsrelevanten Hilfsflächen DI und DN (Fig. 23) gekürzt und zur Hilfsfläche KFK 62b (Fig. 23) und um die Rotationsachse M mit einem Winkel rotiert.

Im Folgenden wird die Verbindung der Basiskontur Außen aus einer der Varianten A oder B mit Freiformflächen für die lange und kurze Ausbuchtung erläutert.

Die Außenfläche (AuFl, Abb.21) wird an den Flächen der Rillenausschnittsgeometrie die durch die Splines 30,31 (lange Rille) und die Splines 32,33 (kurze Rille) entstehen getrimmt. (siehe Abb. 21).

An konstruktionswichtigen Punkten werden mit Hilfe von Hilfsflächen Schnittkurven an der Außenfläche AuFl (Fig. 21, 22) und an den Hilfsflächen KFL, Bezugszeichen 62a und KFK, Bezugszeichen 62b schwarz hervorgehoben) erzeugt.

Die Endpunkte BA bis BS (Fig. 21) und CA - CP (Fig. 22), (der Schnittkurven an der Außenfläche der Basiskonturen Innen und Außen) werden mit Splines an den Schnittkurven der Hilfsflächen KFL und KFK mit Splines 70 bis 87, (Fig. 22 und Fig. 23) verbunden.

Die Schnittkurven DA bis DN, Fig. 21, 22 und 23) der Hilfsflächen KFL und KFK werden bevorzugt als Stützkurven der Splines 72a bis 87, Fig. 21 und Fig. 22) verwendet, die Splines können an den Stützpunkten krümmungsstetig oder tangentenstetig, mindestens aber punktstetig zu den Hilfschnittkurven DA bis DN (Fig. 21) und der Schnittkurven der Endpunkte BA bis BS, sowie der Punkte CA bis CG sein.

Der Übergang der Splines 70 bis 79, (Fig.15, 16 und 17) in den Endpunkten BA bis BT, Fig.15, 16 und 17) kann bevorzugt krümmungsstetig, bevorzugt mindestens aber tangentenstetig zur Außenfläche (AuFI, Fig. 14) sein. Diese Splines 72 bis 87 (Fig.22 23) haben bevorzugt einen Krümmungsverlauf der durch ein Polynom n-ten Grades beschrieben werden, wobei n größer gleich 2 und kleiner 7 ist.

Die untenstehende Tabelle gibt Beispiele für die Stetigkeiten an:

| Varianten | Endpunkte BA bis BT | Stützpunkte CA bis CG |
|---|---|---|
| A | G1 - Tangentenstetigkeit | G0 - Punktstetigkeit |
| B | G1 - Tangentenstetigkeit | G1 - Tangentenstetigkeit |
| C | G1 - Tangentenstetigkeit | G2 - Krümmungstetigkeit |
| D | G2 - Krümmungstetigkeit | G0 - Punktstetigkeit |
| E | G2 - Krümmungstetigkeit | G1 - Tangentenstetigkeit |
| F | G2 - Krümmungstetigkeit | G2 - Krümmungstetigkeit |

Im Folgenden wird das Erzeugen der Freiformflächen für die lange und die kurze Ausbuchtung beschrieben.

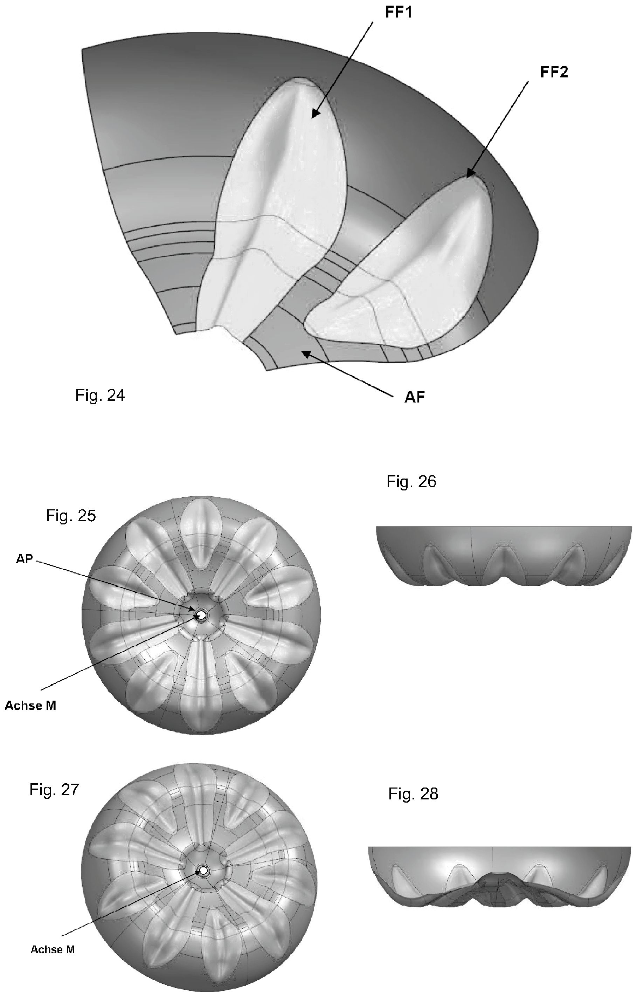

Fig. 24 zeigt eine teilweise perspektivische Darstellung des Bodenabschnitts.

An der Flächenkante der Außenfläche AF (Fig. 24) und den Schnittkurven DA bis DN (Fig. 23) mit den Splines 72a bis 87, (Fig. 21 und Fig. 22) werden bevorzugt die Freiformflächen FF1 und FF2 (Fig.24) für die kurze und lange Ausbuchtung erzeugt. Diese Freiformflächen FF1 und FF2 (Fig. 24) können bevorzugt krümmungsstetig, mindestens aber tangentenstetig zu der Außenfläche AF (Fig.10) sein.

Der Krümmungsverlauf in u- und v-Richtung der Freiformfläche FF1 und FF2, (Fig.10) des Ausbuchtungssegments kann durch Polynome n-ten Grades beschrieben werden, wobei n größer gleich 2 und kleiner 7 ist.

Die Fig. 25 und 26 zeigen zwei weitere Darstellungen des Bodenabschnitts.

Das Rillensegment wird mit der Anzahl der langen Ausbuchtungen, die vorher definiert worden ist, um die Rotationsachse (Achse M), vervielfältigt. Ein Anspritzpunkt AP zur Zentrierung des Preforms wird ergänzt und damit ergibt sich der Freiformboden für stille und leicht druckbeaufschlagte Produkte bis 0,3bar.

Fig. 25 zeigt die Ansicht von unten und Fig. 26 zeigt die Seitenansicht eines Freiformbodens für stille und leicht druckbeaufschlagte Produkte bis 0,3 bar mit 5 kurzen und 5 langen Ausbuchtungen.

Fig. 27 zeigt eine gedrehte Ansicht von unten und Fig. 28 zeigt einen Schnitt durch eine kurze und eine lange Ausbuchtung des Freiformbodens für stille und leicht druckbeaufschlagte Produkte bis 0,3 bar mit 5 Schleifen.

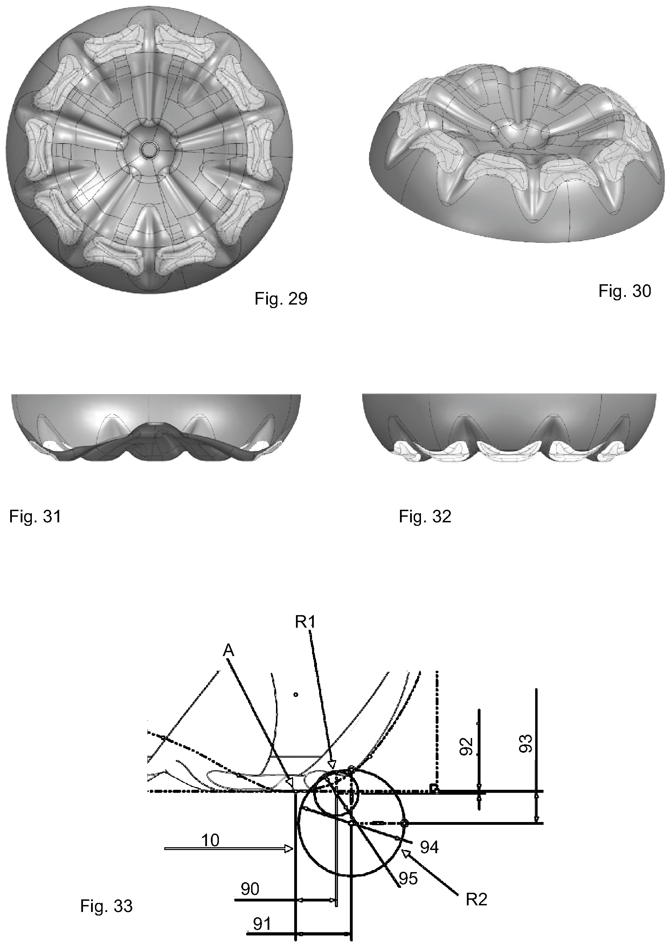

Es wären weiterhin Varianten denkbar, welche nicht ausgeformte Standfüße der Behältnisse zeigen. Dies könnte insbesondere für Fertigblasdrücke unter 15bar einschlägig sein. Die Fig. 29 - 32 zeigen derartige Ausführungsformen.

Während der Versuche wurde der der Fertigblasdruck so weit wie möglich reduziert, dabei wurde festgestellt, dass der Standkreisdurchmesser vom Preformmaterial nicht mehr erreicht werden kann und die Flächen der Ausbuchtungen in diesem Bereich auch nicht mehr bis zur Bodenformwand ausgeprägt werden können.

Diese dadurch entstandene Bodengeometrie kann man auch nachbilden und die Bodengeometrie als weitere Variante für niedrige Fertigblasdrücke anwenden.

Dabei kann eine Konstruktion der "nicht ausgeformten Füßchen" erfolgen.

Auf einer Ebene mittig zwischen einer langen und kurzen Ausbuchtung wird die Bodenkontur mit Hilfe einer Schnittkurve abgenommen. Zum Standkreisdurchmesser Maß 10 (Fig. 5) mit Punkt A (Fig. 6) und zur Bodenhöhe Maß 9 (Fig. 6) werden bevorzugt die Konturen für das "nicht ausgeformte Füßchen" konstruiert.

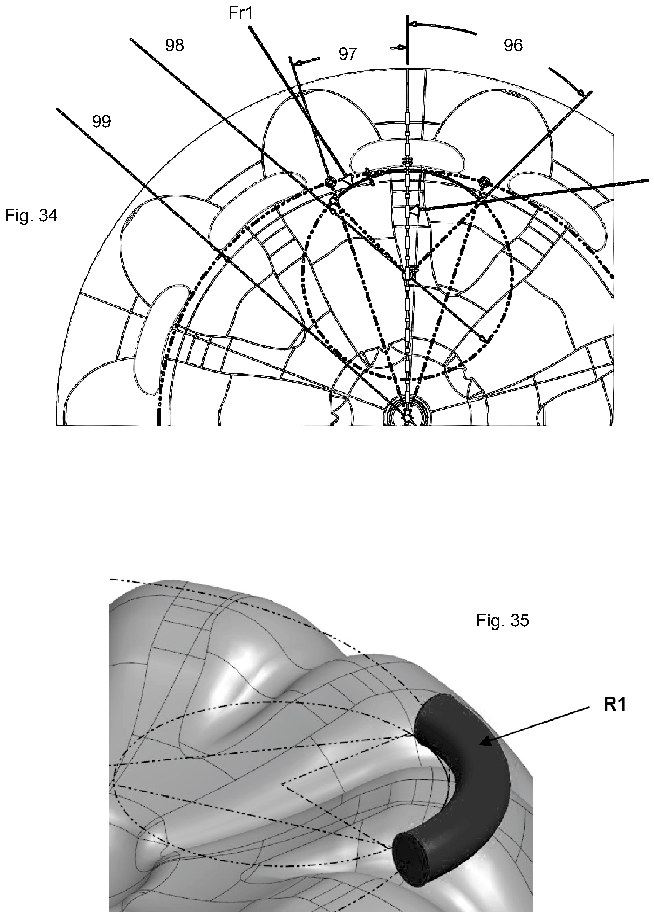

In Fig. 33 wird der kleine Durchmesser des Rohres R1 95 mit den Maßen 90 und 92 (Abb. 34) für die Positionierung verwendet. Das Maß 90 steht in einem Verhältnis zum Standkreisdurchmesser Maß 10 (Fig. 33). Das Verhältnis kann sich zwischen 0,01 und 0,20 bewegen, insbesondere zwischen 0,03 und 0,10.

Das Maß 92 steht in einem Verhältnis zur Bodenhöhe Maß 9 (Fig. 5). Das Verhältnis kann sich zwischen 0,001 und 0,20 bewegen, insbesondere zwischen 0,005 und 0,10.

Mit Hilfe der Skizze (Fig. 34) wird die auszubildende Form des Rohres R1 um das Füßchen beschrieben. Der Öffnungswinkel wird über das Maß 97 definiert, und ist auch abhängig von der Anzahl der Ausbuchtungen bzw. Füßchen. Bei 10 langen und kurzen Ausbuchtungen ist der Öffnungswinkel 360/10/2.

Die Führung FR1 (Fig. 34) des Rohres R1 wird durch Durchmesser 98 für eine Biegung des Rohres beschrieben und ist bevorzugt frei wählbar.

Der Öffnungswinkel 96 (Fig. 34) der Führung FR1 liegt bevorzugt zwischen 18° und 60° und ist so gewählt das die Bodengeometrie nicht verletzt wird.

Die Position des Rohres R1 zum Standkreisdurchmesser 10 (vgl. Fig. 5 und Fig. 34) wird über den Durchmesser 99 (Fig.34) definiert. Das Maß 99 steht in einem Verhältnis zu dem Standkreisdurchmesser - Maß 10 (Fig. 5 und Fig. 33). Das Verhältnis kann sich zwischen 1,0 und 1,25 bewegen, insbesondere zwischen 1,001 und 1,15 und besonders bevorzugt zwischen 1,02 und 1,13.

In Fig. 35 ist das Rohr 1 dargestellt, bevor es von der Bodengeometrie abgezogen wird.

Im Folgenden wird der Teil des "nicht ausgeformten Füßchens" über die Flanke bzw. zu dem Hauptdurchmesser hin beschrieben.

In der Fig. 33 wird der große Durchmesser des Rohres R2 94 (Fig.33) mit den Maßen 91 und 93 (Fig. 33) für die Positionierung verwendet. Das Maß 91 steht in einem vorgegebenen Verhältnis zum Standkreisdurchmesser Maß 10 (Fig. 33). Das Verhältnis bewegt sich vorteilhaft sich zwischen 0,01 und 0,20, insbesondere zwischen 0,05 und 0,18.

Das Maß 93 steht in einem vorgegebenen Verhältnis zur Bodenhöhe Maß 9 (Fig. 5). Das Verhältnis bewegt sich vorteilhaft zwischen 0,03 und 0,65, insbesondere zwischen 0,05 und 0,30 und insbesondere zwischen 0,07 und 0,25.

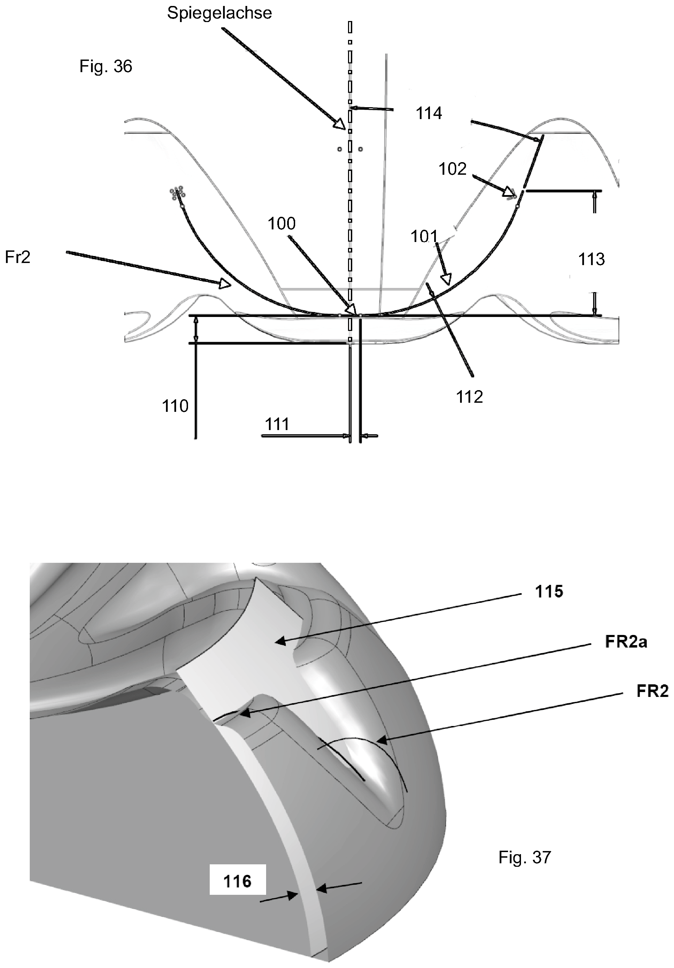

Mit Hilfe der Fig. 36 bzw. Skizze 36 wird die auszubildende Form des Rohres R2 an der Flanke beschrieben.

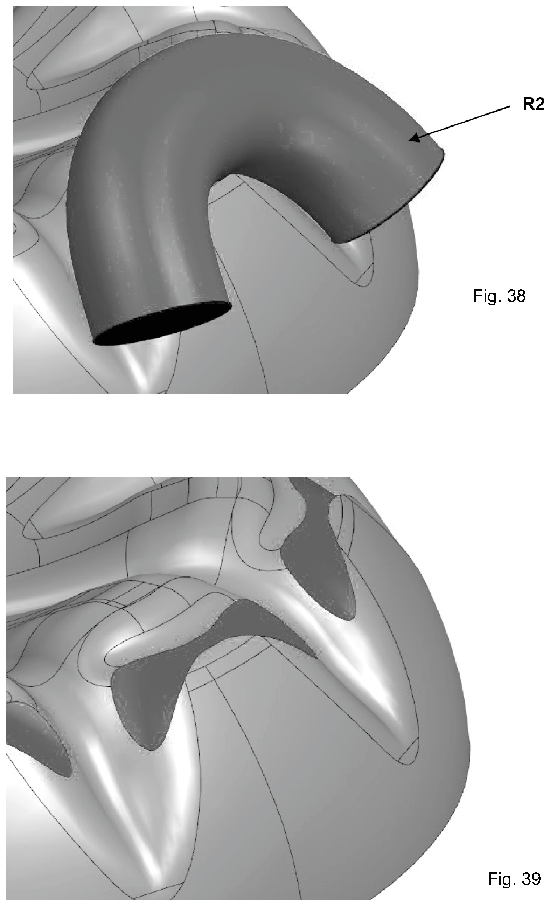

Die halbe Führung des Rohres R2 wird durch den Konturverlauf bestehend aus einer Geraden 100, einem Radius 101 und einer Geraden 102 mit einem Öffnungswinkel 114 beschrieben. Der Konturverlauf wird an der Spiegelachse gespiegelt. Damit entsteht die gesamte Führung für Rohr R2 (vgl. Fig. 38).

Über das Maß 110 wird der Abstand des Konturverlaufs zur Unterkante der Bodengeometrie definiert, und kann in einem vorgegebenen Verhältnis zur Bodenhöhe stehen. Das Verhältnis kann sich zwischen 0,01 und 0,30 bewegen, insbesondere zwischen 0,02 und 0,20.

Durch das Maß 113 wird die Höhe des Konturverlaufs von Rohr R2 bestimmt.

Die Führung FR2 (Fig. 37) des Rohres R2 wird auf eine Hilfsfläche HFR2 115, (Fig. 37) projiziert. Die Hilfsfläche HFR2 ist bevorzugt parallel zur Außenfläche des Bodens mit einem Abstand 116, (Fig. 38). Die auf die Hilfsfläche HFR2 projizierte Führung FR2a wird bevorzugt zum Erstellen des Rohrs R2 verwendet.

In Fig. 37 ist Rohr 2 dargestellt, bevor es von der Bodengeometrie abgezogen wird.

Wenn die beiden Rohre R1 und R2 von der Bodengeometrie abgezogen (vgl. Fig. 39) sind, werden diese bevorzugt noch mit Radien verrundet, um die Ausprägbarkeit zu verbessern. Die Fig. 30 zeigt das Ergebnis.

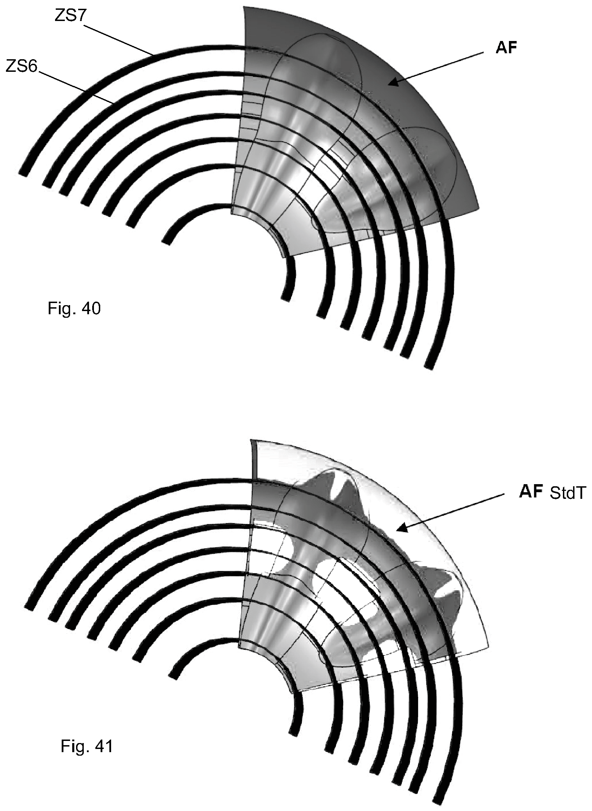

Die Fig. 40 dienen insbesondere der Veranschaulichung des erfindungsgemäßen Bodenabschnitts im Vergleich zu dem Bodenabschnitt nach dem oben zitierten Stand der Technik.

Fig. 40 zeigt eine Darstellung der Außenoberfläche des Bodenabschnitts des erfindungsgemäßen Kunststoffbehältnisses und Fig. 41 zeigt eine Darstellung nach dem oben genannten Stand der Technik (EP 2 764 979). Zur Veranschaulichung werden Zylinderschnitte ZS1 - ZS7 dargestellt. Man erkennt in Fig. 40 die Umrandungen U1 und U2 der ersten und zweiten Verstärkungsausbuchtungen. In Fig. 41 zeigen die weißen Flächenbereich innerhalb der grauen Flächenbereiche die Geometrien des Bodenabschnitts nach dem Stand der Technik.

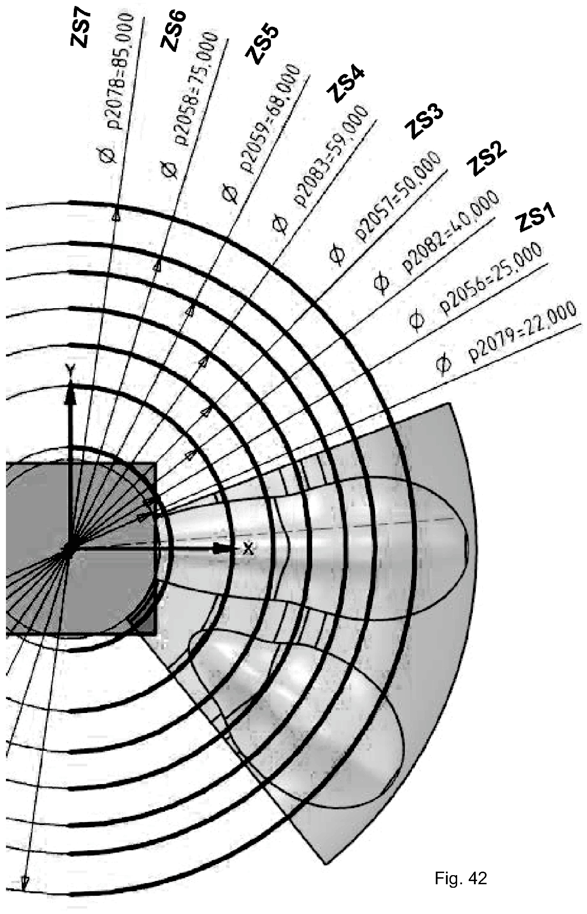

Diese Zylinderschnitte wurden bei unterschiedlichen Durchmessern des Bodenabschnitts gemacht, welche in Fig. 42 veranschaulicht sind.

Es wurden die folgenden Schnitte vorgenommen.

Die innerste Kreislinie liegt bei einem Radius von 22% bezogen auf den Außendurchmesser 8 (vgl. Fig.5)

Der erste Zylinderschnitt ZS1 liegt bei 25% des Außendurchmessers bzw. bei 25,0mm.

Der zweite Zylinderschnitt ZS2 liegt bei 40% des Außendurchmesser bzw. bei 40,0mm.

Der dritte Zylinderschnitt ZS3 liegt bei 50% des Außendurchmesser bzw. bei 50,0mm.

Der vierte Zylinderschnitt ZS4 liegt bei 59% des Außendurchmesser bzw. bei 59,0mm.

Der fünfte Zylinderschnitt ZS5 liegt bei 68% des Außendurchmesser bzw. bei 68,0mm. Dieser Durchmesser entspricht dem Standkreisdurchmesser bei dem Bodenabschnitt des erfindungsgemäßen Kunststoffbehältnisses.

Der sechste Zylinderschnitt ZS6 liegt bei 75% des Außendurchmesser bzw. bei 75,0mm. Dieser Durchmesser entspricht dem Standkreisdurchmesser bei dem Bodenabschnitt Kunststoffbehältnisses nach dem oben genannten Stand der Technik.

Der siebte Zylinderschnitt ZS7 liegt bei 85% des Außendurchmesser bzw. bei 85,0mm.

Die nachfolgenden Abbildungen zeigen die Rillen- bzw. Ausbuchtungsvergleiche bei den oben erwähnten Zylinderschnitten.

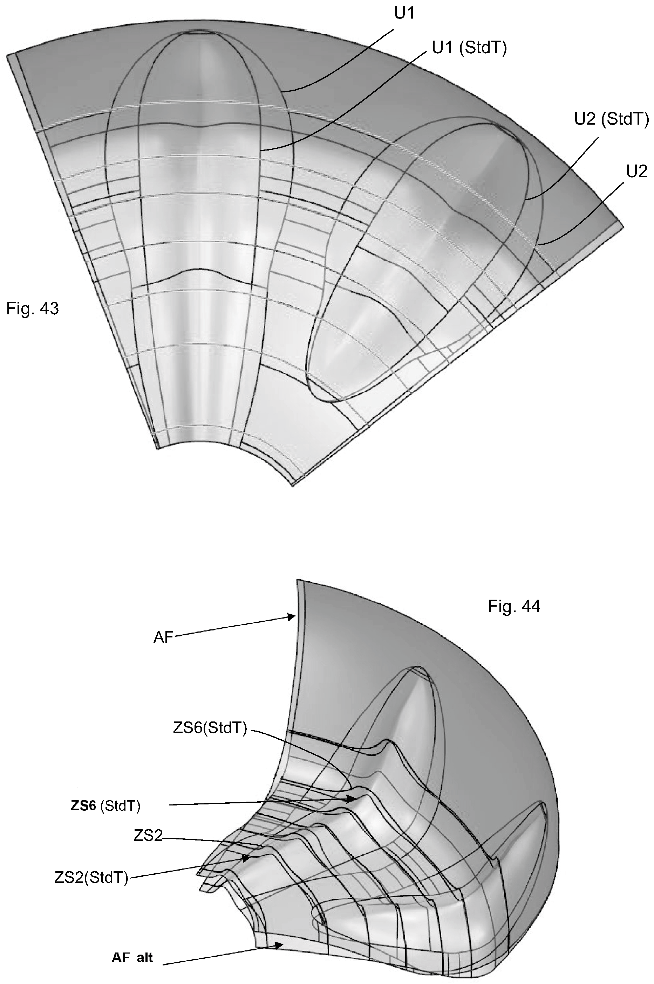

In Fig. 43 sieht man die Segmente mit langer und kurzer Verstärkungsausbuchtung des erfindungsgemäßen Bodenabschnitts und des Standes der Technik übereinander. Die Bezugszeichen U1 und U2 kennzeichnen die Umrandungen bei den Verstärkungsausbuchtungen des erfindungsgemäßem Kunststoffbehältnisses und die Bezugszeichen U1 (StdT) und U2 (StdT) die Umrandungen bei den Rillen des Bodenabschnitts nach dem Stand der Technik

Die grau dargestellten Schnittkurven gehören zu den vorher gezeigten Zylinderschnitten vom grauen Boden und die schwarzen Schnittkurven zu den Zylinderschnitten der gelben Vorgängerbodenversion d.h. dem Kunststoffbehältnis nach dem Stand der Technik.

Die Fig. 44 und 45 zeigen die Segmente aus verschiedenen Perspektiven zur besseren Veranschaulichung. Des Weiteren kann man hier die Unterschiede der Ausbuchtungen in beiden Varianten gut sehen. Die schmale Rillengeometrie ist die Vorgängerversion (EP 2764979) und die breite Rillengeometrie die des erfindungsgemäßen Bodens.

Es ist sogar erkennbar, dass die Rillenhöhen unterschiedlich sind und der Beginn der Ausbuchtung im neuen Boden im Zentrum höher liegt als in der Vorgängerversion bzw. dem Boden nach dem Stand der Technik.

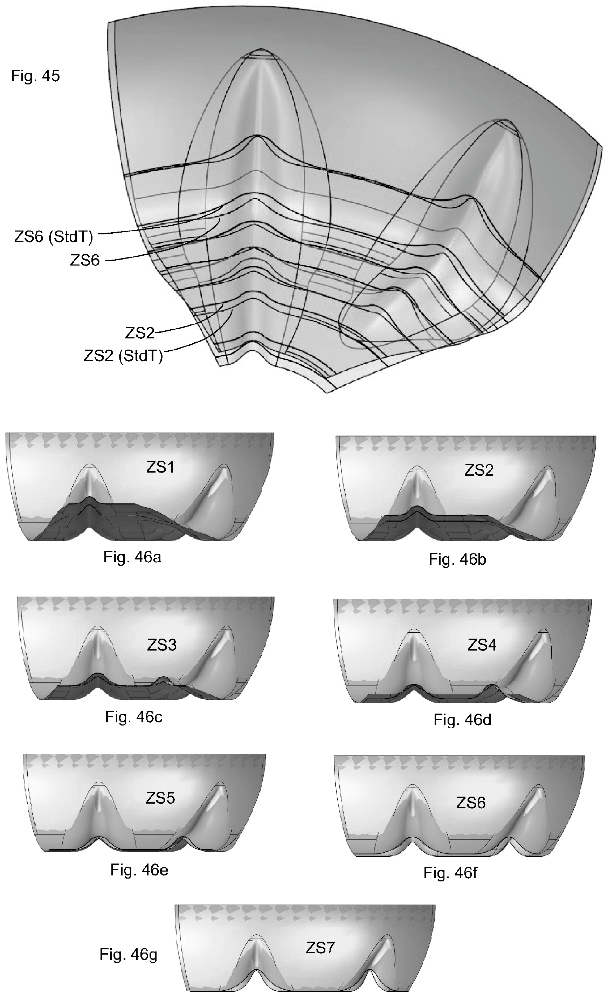

Die Fig. 46a - 46g zeigen die Zylinderschnitte durch beide Bodensegmente an den verschiedenen Position ZS1 bis ZS8 (Fig. 42) in Richtung der X-Achse (Fig. 42).

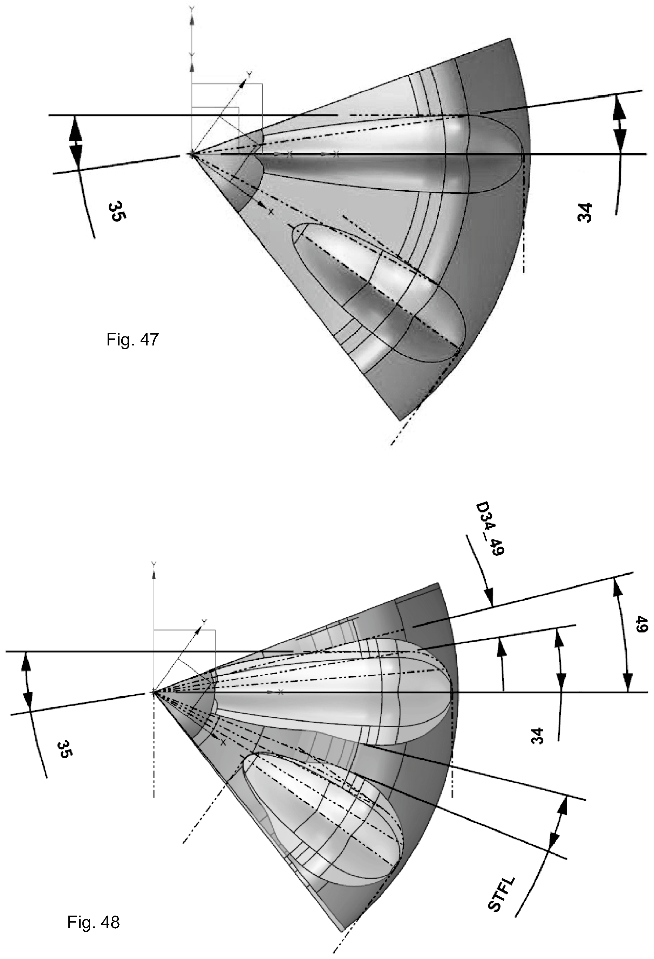

Fig. 47 zeigt eine Draufsicht auf den Behältnisboden eines Kunststoffbehältnisses nach dem Stand der Technik. Dabei sind die Winkel 34 und 35 dargestellt. Diese Winkel betragen jeweils 8°

Fig. 48 zeigt eine entsprechende Ansicht für das erfindungsgemäße Kunststoffbehältnis. Zur Orientierung sind auch wieder die Winkel 34 und 35 eingezeichnet.

Man erkennt, dass der Winkel 49 ein Maß für die maximale Breite bei Ausbuchtung bei dem erfindungsgemäßen Kunststoffbehältnis ist. Dieser Winkel läßt sich bei dem Bodenabschnitt nach dem Stand der Technik nicht darstellen.

In Fig. 48 sieht man die Segmente mit langer und kurzer Ausbuchtung des erfindungsgemäßen Boden und von der Vorgängerbodenversion (gelb, EP 2764979) übereinander um die Unterschiede besser sichtbar zu machen.

Die Standfläche (STFL, Fig..48) ist bevorzugt nicht kleiner werden 0.5° (Bezogen auf die Längsachse).

Die Differenz zwischen den beiden Winkel 49 und 34 liegt bevorzugt zwischen 0,25° und 8,5° und besonders bevorzugt zwischen 1,0° und 6,0°. Der Winkel 49, Abb. 55, wird also bevorzugt mindestens 0,25° größer sein als der Winkel 34.

Im Vergleich ist der Winkel 34 bei dem Boden nach dem Stand der Technik 1° kleiner als bei dem erfindungsgemäßen Boden. Der Winkel 34 des erfindungsgemäßen Bodenabschnitts wird aber bevorzugt immer mindestens 0,25° größer sein als in der Version nach dem Stand der Technik. Die Verhältnisse der Winkel für die lange Ausbuchtung sind übertragbar auf die kurze Ausbuchtung und sind bevorzugt im Wesentlichen gleich und/oder weichen um nicht mehr als 20%, bevorzugt um nicht mehr als 15% und besonders bevorzugt um nicht mehr als 10% von dieser ab.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Kunststoffbehältnis (100) zur Aufnahme von Getränken, mit einer Mündung (102), einem sich in einer Längsrichtung (L) des Kunststoffbehältnisses (100) an diese Mündung (102) anschließenden Wandabschnitt (104) und einem als Standfläche ausgebildeten Bodenabschnitt (106) wobei das Kunststoffbehältnis (100) einteilig ausgebildet ist, und wobei der Bodenabschnitt (106) einen in einer radialen Richtung (R) bezüglich der Längsrichtung (L) innen liegenden Anspritzpunkt (110) an der Außenwandung des Kunststoffbehältnisses (100) aufweist und einen diesen Anspritzpunkt (110) umgebenden Zentralbereich (112) aufweist, sowie einen sich von diesem Zentralbereich (112) zu dem Wandabschnitt (104) erstreckenden Übergangsabschnitt (114, 116, 118), wobei dieser Übergangsabschnitt (114, 116, 118) in wenigstens einer und bevorzugt in jeder radialen Richtung (R) des Kunststoffbehältnisses (100) in wenigstens einem Teilabschnitt eine Krümmung mit einem endlichen Krümmungsradius (2, 3, 4) aufweist, wobei
der Zentralbereich (112) eine erste domartige Struktur (130) derart aufweist, dass der Anspritzpunkt (110) in der Längsrichtung (L) des Kunststoffbehältnisses (100) in Richtung der Mündung (102) des Kunststoffbehältnisses (100) ragt und wobei der Bodenabschnitt eine Vielzahl von gleichartigen ersten Verstärkungsausbuchtungen (122) aufweist welche sich jeweils in einer radialen Richtung des Bodenabschnitts erstrecken wobei diese ersten Verstärkungsausbuchtungen (122) jeweils in der radialen Richtung einen Abschnitt (AB_max1) maximaler Breite bezogen auf die Umfangsrichtung des Bodenabschnitts aufweisen,
**dadurch gekennzeichnet, dass**
dieser Abschnitt maximaler Breite bezogen auf einen geometrischen Mittelpunkt des Bodenabschnitts und/oder bezogen auf eine Längsachse des Behältnisses einen Winkel einschließt der größer ist als 20°.

2. Kunststoffbehältnis nach Anspruch 1,
**dadurch gekennzeichnet, dass**
sich an die erste domartige Struktur (130) des Zentralbereichs (112) in der radialen Richtung nach außen eine zweite domartige Struktur (140) anschließt, wobei diese zweite domartige Struktur in Richtung der Mündung (102) des Kunststoffbehältnisses (100) gewölbt ist, wobei ein Krümmungsradius der ersten domartigen Struktur (130) wenigstens abschnittsweise geringer ist als ein Krümmungsradius der zweiten domartigen Struktur (140).

3. Kunststoffbehältnis nach Anspruch 1,
**dadurch gekennzeichnet, dass**
der Bodenabschnitt (106) eine Vielzahl von gleichartigen zweiten Verstärkungsausbuchtungen (124) aufweist welche sich jeweils in einer radialen Richtung des Bodenabschnitts erstrecken, wobei die zweiten Verstärkungsausbuchtungen (124) in der radialen Richtung des Bodenabschnitts kürzer sind als die ersten Verstärkungsausbuchtungen (122), wobei bevorzugt die Anzahl der ersten Verstärkungsausbuchtungen (122) und die Anzahl der zweiten Verstärkungsausbuchtungen (124) gleich ist und/oder die ersten Verstärkungsausbuchtungen (122) und die zweiten Verstärkungsausbuchtungen (124) in einer Umfangsrichtung des Bodenabschnitts (106) abwechselnd angeordnet sind.

4. Kunststoffbehältnis nach Anspruch 3,
**dadurch gekennzeichnet, dass**
diese zweiten Verstärkungsausbuchtungen jeweils in der radialen Richtung einen Abschnitt (AB_max2) maximaler Breite bezogen auf die Umfangsrichtung des Bodenabschnitts (106) aufweisen und dieser Abschnitt maximaler Breite bezogen auf einen geometrischen Mittelpunkt des Bodenabschnitts (106) und/oder bezogen auf eine Längsachse (L) des Behältnisses einen Winkel einschließt der größer ist als 20°.

5. Kunststoffbehältnis (100) nach wenigstens einem der vorangegangenen Ansprüche, **dadurch gekennzeichnet, dass**
der Abschnitt maximaler Breite (AB_max1, AB_max2) der ersten Verstärkungsausbuchtungen (122) und/oder der zweiten Verstärkungsausbuchtung (124) bezogen auf die radiale Erstreckung dieser Verstärkungsausbuchtungen (122, 124) in den inneren 90% dieser Verstärkungsausbuchtung, bevorzugt in den inneren 85% dieser Verstärkungsausbuchtung, bevorzugt in den inneren 80% dieser Verstärkungsausbuchtung und besonders bevorzugt in den inneren 75% dieser Verstärkungsausbuchtung angeordnet ist.

6. Kunststoffbehältnis (100) nach wenigstens einem der vorangegangenen Ansprüche, **dadurch gekennzeichnet, dass**
die ersten Verstärkungsausbuchtungen (122) und/oder die zweiten Verstärkungsausbuchtungen (124) eine umlaufende und diese Verstärkungsausbuchtungen umlaufende Begrenzungslinie und/oder einen Umfangsrand (U1, U2) aufweisen und ein Querschnitt dieser Begrenzungslinie und/oder dieses Umfangsrands in einer Projektion entlang der Längsrichtung des Kunststoffbehältnisses ein birnenartiges Profil aufweist und/oder die ersten Verstärkungsausbuchtungen (122) und/oder die zweiten Verstärkungsausbuchtungen (124) eine umlaufende und diese Verstärkungsausbuchtungen umlaufende Begrenzungslinie und/oder einen Umfangsrand (U1, U2) aufweisen und ein Verlauf dieser Begrenzungslinie und/oder dieses Umfangsrangs (U1, U2) in einer Projektion der Begrenzungslinie ausgehend von einem radial innersten Punkt bis zu einem radial äußersten Punkt wenigstens einen Wendepunkt aufweist.

7. Kunststoffbehältnis (100) nach wenigstens einem der vorangegangenen Ansprüche, **dadurch gekennzeichnet, dass**
wenigstens ein Abschnitt (112, 114, 116, 118) des Bodenabschnitts (106) in einen weiteren Abschnitt (112, 114, 116, 118) des Bodenabschnitts (106) tangentenstetig übergeht.

8. Kunststoffbehältnis (100) nach wenigstens einem der vorangegangenen Ansprüche, **dadurch gekennzeichnet, dass**
eine Standfläche des Kunststoffbehältnisses (100) wenigstens abschnittsweise ringförmig ausgebildet ist, wobei diese Standfläche einen vorgegebenen Standkreisdurchmesser (10) aufweist und ein Verhältnis zwischen dem Standkreisdurchmesser (10) und einem Außendurchmesser des Kunststoffbehältnisses (100) zwischen 0,60 und 0,95, bevorzugt zwischen 0,61 und 0,90, bevorzugt zwischen 0, 61 und 0,80, bevorzugt zwischen 0,61 und 0,75 und besonders bevorzugt zwischen 0,61 und 0,70 und besonders bevorzugt zwischen 0,62 und 0,69 und besonders bevorzugt zwischen 0,63 und 0,68 liegt.

9. Kunststoffbehältnis (100) nach wenigstens einem der vorangegangenen Ansprüche, **dadurch gekennzeichnet, dass**
der Bodenabschnitt (106) in dem Bereich einer Standfläche des Bodenabschnitts (106) einen Abschnitt (126) mit einem geradlinigen Verlauf aufweist und bevorzugt dieser geradlinige Abschnitt eine Länge aufweist, die zwischen 0,01mm und 2mm liegt und die bevorzugt zwischen 0,1mm und 2,0mm liegt und die bevorzugt zwischen 0,2mm und 2,0mm, bevorzugt zwischen 0,3mm und 1,8mm und besonders bevorzugt zwischen 0,4mm und 1,6mm uns besonders bevorzugt zwischen 0,5mm und 1,5mm und besonders bevorzugt zwischen 0,7mm und 1,3mm liegt.

10. Kunststoffbehältnis (100) nach wenigstens einem der vorangegangenen Ansprüche, **dadurch gekennzeichnet, dass**
wenigstens eine Verstärkungsausbuchtung (122, 124) in einer Projektion entlang einer Symmetrielinie der Verstärkungsausbuchtung und/oder in einer Abwicklung in einer Umfangsrichtung des Bodenabschnitts einen vorgegebenen Verlauf aufweist, und dieser vorgegebene Verlauf wenigstens zwei und bevorzugt genau zwei Wendepunkte aufweist wobei ein Abstand dieser beiden Wendepunkte kleiner ist als 50% des gesamten vorgegebenen Verlaufs.

11. Kunststoffbehältnis (100) nach wenigstens einem der vorangegangenen Ansprüche, **dadurch gekennzeichnet, dass**
eine Standfläche des Kunststoffbehältnisses von den ersten Verstärkungsausbuchtungen (122) unterbrochen ist.

12. Kunststoffbehältnis (100) nach wenigstens einem der vorangegangenen Ansprüche, **dadurch gekennzeichnet, dass**
das Kunststoffbehältnis (100) aus einem Kunststoffmaterial und insbesondere aus PET hergestellt ist, welches einen Rezyklatanteil von wenigstens 50%, bevorzugt von wenigstens 60%, bevorzugt von wenigstens 70%, bevorzugt von wenigstens 75%, besonders bevorzugt von wenigstens 80% aufweist.

13. Verfahren zur Herstellung eines Kunststoffbehältnisses (100) nach wenigstens einem der vorangegangenen Ansprüche, wobei zunächst Kunststoffvorformlinge zur Verfügung gestellt werden und diese Kunststoffvorformlinge erwärmt werden und die Kunststoffvorformlinge innerhalb einer Blasform expandiert werden, wobei ein Bodenteil dieser Blasform derart gestaltet ist, dass es einen Bodenabschnitt eines Kunststoffbehältnisses (100) nach wenigstens einem der vorangegangenen Ansprüche erzeugt,
**dadurch gekennzeichnet, dass**
die Kunststoffvorformlinge zu ihrer Expansion mit einem gasförmigen Medium mit wenigstens zwei unterschiedlichen Druckstufen beaufschlagt werden, wobei eine dieser Druckstufen einen Fertigblasdruck aufweist und dieser Fertigblasdruck unter 30 bar, bevorzugt unter 25 bar und besonders bevorzugt unter 20 bar, besonders bevorzugt unter 19bar, besonders bevorzugt unter 18bar und besonders bevorzugt unter 17bar und besonders bevorzugt unter 16bar und bevorzugt unter 14bar und besonders bevorzugt unter 12bar und besonders bevorzugt unter 10bar liegt.

14. Verwendung eines Kunststoffbehältnisses nach wenigstens einem der vorangegangenen Ansprüche für Stillgetränke und insbesondere stille und leicht druckbeaufschlagte Produkte.

15. Blasform zum Herstellen eines Kunststoffbehältnisses nach wenigstens einem der vorangegangenen Ansprüche,
**dadurch gekennzeichnet, dass**
diese Blasform ein Bodenteil aufweist, welches zur Erzeugung eines Bodenabschnitts für ein Kunststoffbehältnis nach wenigstens einem der vorangegangenen Ansprüche geeignet und bestimmt ist.
